# EUROPEAN PATENT SPECIFICATION

(11) **EP 0 406 810 B1**
(45) Date of publication and mention of the grant of the patent: **30.11.1994**
(21) Application number: 90112698.7
(22) Date of filing: 03.07.1990
(51) Int. Cl.: C08K 13/02, C08K 5/35, C08K 3/32, C08K 5/3492

(54) **Self-extinguishing polymeric compositions**
Selbst-löschende polymerische Zusammensetzungen
Compositions polymères auto-extinctrices

(30) Priority: 03.07.1989 IT 2106689
(43) Date of publication of application: 09.01.1991
(73) Proprietor: MINISTERO DELL' UNIVERSITA' E DELLA RICERCA SCIENTIFICA E TECNOLOGICA, 00196 Roma (IT)
(72) Inventor: Cipolli, Roberto, I-28100 Novara (IT); Oriani, Roberto, I-20137 Milan (IT); Nucida, Gilberto, I-20098 S. Giuliano Milanese, Milan (IT); Pirozzi, Mario, I-20097 S. Donato Milanese, Milan (IT); Masarati, Enrico, I-29010 Castelnovo Valtidone, Piacenza (IT)
(74) Representative: Weinhold, Peter, Dr.

(56) References cited:
- EP-A- 0 051 347
- EP-A- 0 070 358
- US-A- 4 504 610

## Description

The present invention relates to self-extinguishing compositions based on thermoplastic polymers and/or polymers endowed with elastomeric properties, in particular olefinic polymers or copolymers, which compositions contain specific triazine compounds in combination with ammonium and/or amine phosphates and/or phosphonates.

Several methods of reducing or eleminating the combustibility of polymers are known in the art. Some of said methods are based on the use of metal compounds, in particular on antimony, bismuth or arsenic, in combination with partially halogenated, thermally unstable organic compounds, such as chlorinated paraffin waxes.

Other methods are based on the use of substances capable of yielding intumescence. The formulations of the intumescent type generally are composed of the polymer and at least three main additives, i.e., an essentially phosphorus-containing additive, whose purpose is to form, during the combustion, an impermeable, semi-solid and vitreous layer essentially composed of polyphosphoric acid and to activate the process of formation of intumescence; a second additive, containing nitrogen, which is to serve as foaming agent; and a third, carbon-containing additive, which acts as a carbon donor in order to allow an insulating cellular carbonaceous layer ("char") to be formed between the polymer and the flame.

Examples of intumescent formulations of said type may be found in US-A-3,810,862 (Phillips Petroleum Co.; based on melamine, pentaerythritol and ammonium polyphosphate); US-A-4,727,102 (Vamp S.r.l.; based on melamine cyanurate, a hydroxyalkyl derivate of isocyanuric acid and ammonium polyphosphate); and WO-85/05626 (Plascoat U.K. Limited; on the basis of various phosphorus and nitrogen compounds among which, in particular, a combination of melamine phosphate, pentaerythritol and ammonium polyphosphate may be mentioned).

In more recent formulations, together with an organic or inorganic phosphorus compound, a nitrogen-containing organic compound was used, generally consisting of an aminoplastic resin obtained by means of condensation of urea, melamine or dicyandiamide with formaldehyde.

Examples of formulations containing two additives are those described in US-A-4,504,610 (Montedison S.p.A.; based on oligomeric derivates of 1,3,5-triazine and ammonium polyphosphate) and EP-A-14,463 (Montedison S.p.A.; based on organic compounds selected from benzylguanamine and reaction products of aldehydes and several cyclic nitrogen compounds, in particular benzylguanamine-formaldehyde copolymers, and ammonium polyphosphate).

Self-extinguishing compositions can also be obtained by using single-component additives, which contain in their organic molecule both nitrogen and phosphorus atoms, as disclosed in US-A-4,201,705 (Borg-Wagner Corp.).

These intumescent flame retardant systems endow the polymers to which they are added with the property of forming a carbonaceous residue when they burn or are exposed to a flame. This kind of flame-retardant system offers numerous advantages, i.e., absence of corrosion phenomena in the machinery in which the polymers are processed, a lower emission of smokes as compared to systems containing metal compounds and halogenated hydrocarbons, and, above all, the possibility of endowing the polymers with satisfactory flame-proof properties with a smaller amount of total additive and therefore without excessively impairing the mechanical properties thereof.

It has now surprisingly been found that it is possible to impart satisfactory flame-proof properties to the above polymers by using additives which result in polymeric compositions containing:
(a) a lower content of ammonium and/or amine phosphate and/or phosphonate than the compositions known from the prior art; as well as
(b) nitrogen compounds, which are derivatives of 2,4,6-triamino-1,3,5-triazine with an extremely simple structure, although said parent compound is not capable of endowing the above polymers with self-extinguishing characteristics.

The above compositions furthermore show the advantage that in case of a fire they give rise to a very moderate and not obscuring smoke emission.

More specifically, the compositions according to the present invention comprise:
(a) from 89 to 45 parts by weight of thermoplastic polymer and/or polymer endowed with elastomeric properties;
(b) from 8 to 30 parts, and preferably from 12 to 30 parts by weight, of one or more ammonium and/or amine phosphates and/or phosphonates;
(c) from 3 to 25 parts, and preferably from 6 to 20 parts by weight, of at least one 2,4,6-triamino-1,3,5-triazine derivative of general formula (I): 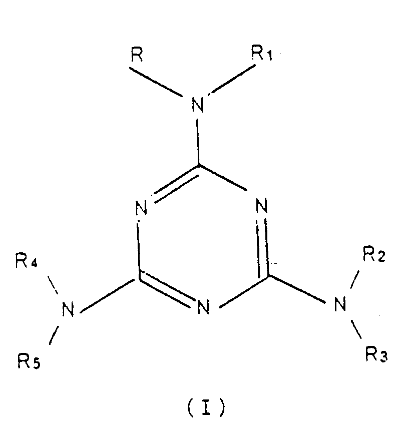
wherein:
at least one of the radicals R to R₅ represents

⁅CₙH₂ₙ⁆O-R₆;

or 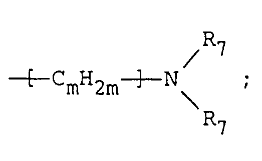
wherein:
- n: = an integer of from 2 to 8, and preferably from 2 to 4;
- m: = an integer of from 2 to 6;
- R₆: = H, (C₁₋₈)- and preferably (C₁₋₄)-alkyl, (C₂₋₆)-alkenyl, ⁅CₚH₂ₚ⁆O-R₈,
wherein p is an integer of from 1 to 4 and R₈ is H, (C₁₋₄)-alkyl, (C₆₋₁₂)-cycloalkyl or (C₆₋₁₂)-alkylcycloalkyl;
the radicals R₇, which can be identical or different from one another, represent H, (C₁₋₈)-alkyl, (C₂₋₆)-alkenyl, (C₆₋₁₂)-cycloalkyl, (C₆₋₁₂)-alkylcycloalkyl or (C₁₋₄)-hydroxyalkyl; or the moiety 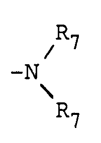
is replaced by an N-heterocyclic radical linked to the alkyl chain through the nitrogen atom and optionally containing one or more other heteroatoms, preferably selected from O, S and N;
or in general formula (I) at least one of the moieties 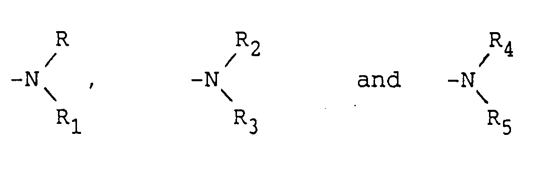
is replaced by an N-heterocyclic radical linked to the triazine ring through the nitrogen atom and optionally containing one or more other heteroatoms, preferably selected from O, S and N;
the remaining radicals R to R₅, which can be either equal to or different from one another, have the above meanings, or represent
H, (C₁₋₁₈)-alkyl, (C₂₋₈)-alkenyl, (C₆₋₁₆)-cycloalkyl and (C₆₋₁₆)-alkylcycloalkyl, optionally substituted with one or more hydroxy groups, e.g., (C₁₋₄)-hydroxyalkyl.

Examples of radicals R to R₅ in the above general formula (I) are:
methyl, ethyl, propyl, isopropyl, n-butyl, isobutyl, tert-butyl, n-pentyl, isopentyl, n-hexyl, tert-hexyl, octyl, tert-octyl, decyl, dodecyl, octadecyl, ethenyl, propenyl, butenyl, isobutenyl, hexenyl, octenyl, cyclohexyl, propyl cyclohexyl, butyl cyclohexyl, decyl cyclohexyl, hydroxycyclohexyl, hxdroxyethyl cyclohexyl, 2-hydroxyethyl, 2-hydroxypropyl, 3-hydroxypropyl, 3-hydroxybutyl, 4-hydroxybutyl, 3-hydroxypentyl, 5-hydroxypentyl, 6-hydroxyhexyl, 3-hydroxy-2,5-dimethyl hexyl, 7-hydroxyheptyl, 7-hydroxyoctyl, 2-methoxy ethyl, 2-methoxy propyl, 3-methoxy propyl, 4-methoxy butyl, 6-methoxy hexyl, 7-methoxy heptyl, 7-methoxy octyl, 2-ethoxy ethyl, 3-ethoxy propyl, 4-ethoxy butyl, 3-propoxy propyl, 3-butoxy propyl, 4-butoxy butyl, 4-isobutoxy butyl, 5-propoxy pentyl, 2-cyclohexyloxy ethyl, 2-ethenyloxy ethyl, 2-(N,N-dimethylamino) ethyl, 3-(N,N-dimethylamino) propyl, 4-(N,N-dimethylamino) butyl, 5-(N,N-dimethylamino) pentyl, 4-(N,N-diethylamino) butyl, 5-(N,N-diethylamino)pentyl, 5-(N,N-di-isobutyl amino) pentyl, 3-(N-ethylamino) propyl, 4-(N-methylamino) butyl, 4-(N,N-di-propylamino) butyl, 2-(N,N-diisopropylamino) ethyl, 6-(N-hexenylamino) hexyl, 2-(N-ethenylamino) ethyl, 2-(N-cyclohexylamino) ethyl, 6-(N-propylamino) hexyl, 2-(2-methoxyethoxy)ethyl, 3-(2-hydroxyethoxy) propyl, 2-(2-hydroxyethoxy) ethyl, 4-(3-methoxy propoxy) butyl, 4-(2-ethoxy ethoxy) butyl, 4-(2-butoxy ethoxy) ethyl; etc.
Examples of heterocyclic radicals which can replace the moieties 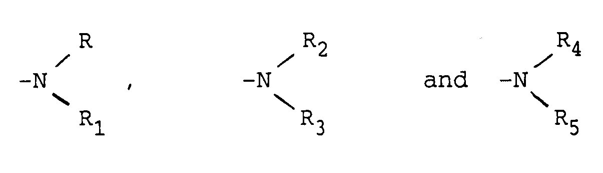
are:
aziridinyl, pyrrolidinyl, piperidinyl, morpholinyl, thiomorpholinyl, piperazinyl, 4-methyl piperazinyl, 4-ethylpiperazinyl, 2-methylpiperazinyl,2,5-dimethylpiperazinyl, 2,3,5,6-tetramethylpiperazinyl, 2,2,5,5-tetramethylpiperazinyl, 2-ethylpiperazinyl, 2,5-diethylpiperazinyl, etc.

Examples of heterocyclic radicals which can replace the moiety 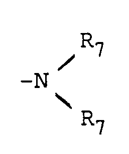
are:
aziridinyl, pyrrolidinyl, piperidinyl, morpholinyl, thiomorpholinyl, piperazinyl, 4-methylpiperazinyl, 4-ethylpiperazinyl, etc.

The compounds of formula (I) in which one or two of the moieties 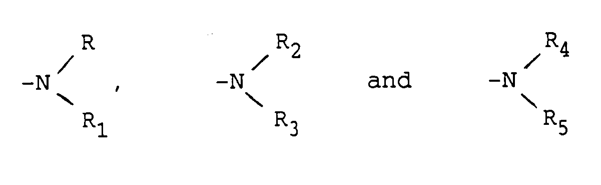
are replaced by 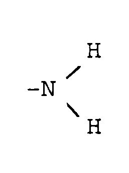
are preferred.

Specific examples of compounds of general formula (I), which can advantageously be used in the compositions according to the present invention are given in the examples below.

The compounds of general formula (I) can be prepared by means of processes known in the art, e.g., by reacting a halide of cyanuric acid, such as, e.g., cyanuric chloride, at a temperature of from 0 to 10°C, in a suitable solvent (such as, e.g., acetone, water, methylene chloride, etc.) with an amine of general formula (II): 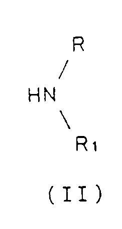
wherein R and R₁ have the meanings given above, in the presence or absence (depending on the molar ratio used in the reaction) of an acid acceptor, such as, e.g., NaOH, NaHCO₃, Na₂CO₃ or triethylamine, resulting in the formation of the intermediate of general formula (III): 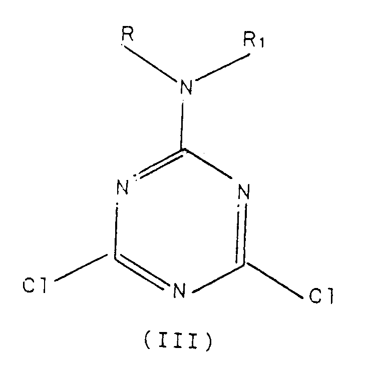
Said intermediate, separated or not separated from the reaction mixture, subsequently is reacted, under conditions similar to those specified hereinabove, but operating at a higher temperature, e.g., at a temperature of from 10 to 50°C, with an amine of general formula (IV): 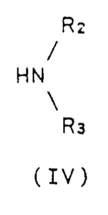
wherein R₂ and R₃ have the meanings given above, resulting in the intermediate of general formula (V): 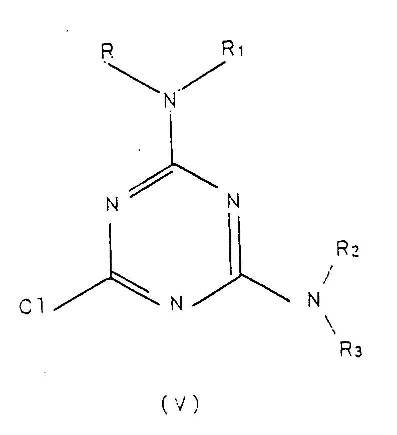
The intermediate (V), separated or not separated from the reaction mixture, in turn is reacted, under the same conditions as in the first two reaction steps, but operating at a higher temperature than in the preceding step, e.g., at a temperature of from 70 to 150°C, and hence using a solvent which is compatible with said temperature conditions (such as, e.g., toluene, water, xylene, dimethylformamide, dichlorobenzene, etc.), with an amine of general formula (VI): 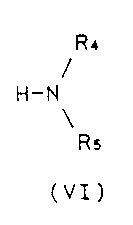
wherein R₄ and R₅ have the meanings already defined above; thus leading to the formation of the end product of general formula (I).

In case compounds of general formula (I) containing two identical amine substituents are desired, the process is carried out either by reacting the intermediate (III) with two mols of an amine of general formula (IV), or by reacting a halide of cyanuric acid, such as, e.g., cyanuric chloride with two mols of an amine of general formula (II) and then, after optional separation of the product, causing it to further react with one mol of amine of general formula (VI), under the conditions disclosed hereinabove.

Among the phosphates, ammonium polyphosphates of the general formula

(NH₄)ₙ₊₂PₙO₃ₙ₊₁

wherein n is an integer equal to, or greater than, 2, are preferred. The molecular weight of the polyphosphates should be high enough to secure a low solubility in water.

For exemplary purposes, n preferably is comprised within the range of from 2 to 500.

The composition of the polyphosphates having the formula indicated hereinabove, in which n is a high enough number, and preferably ranges from 5 to 500, practicallly corresponds to a metaphosphate of formula

(NH₄PO₃)ₙ.

An example of said polyphosphates is the product known under the trade name "Exolit® 422" (Hoechst), having the composition (NH₄PO₃)ₙ in which n is greater than 50. Another example is the product known under the name "Phos-Chek® P/30" (Monsanto Chemical) which has a similar composition.

Another polyphosphate which can be used advantageously, above all thanks to its low solubility in water, is the product known under the trade name "Exolit^{R} 462" (Hoechst) which is "Exolito® 422" microencapsulated in melamine-formaldehyde resin.

Other phosphates which can be used are those which are derived from amines, such as, e.g., dimethyl ammonium phosphate or diethyl ammonium phosphate, ethylene diamine phosphate, melamine orthophosphate or melamine pyrophosphate.

Good results may also be obtained by using mono- or polyammonium phosphonates selected from the salts derived from mono- or polyphosphonic acids.

Examples of said acids are:
ethane-1,1,2-triphosphonic acid, ethane-2-hydroxy-1,1,2-triphosphonic acid, propane-1,2,3-triphosphonic acid, methylphosphonic acid, ethylphosphonic acid, n-propylphosphonic acid, n-butylphosphonic acid, phenylphosphonic acid, ethane-1-amino-1,1-diphosphonic acid ethane-1-hydroxy-1,1-diphosphonic acid, dodecane-1-hydroxy-1,1-diphosphonic acid, phosphonoacetic acid, 2-phosphonopropionic acid, 3-phosphonopropionic acid, 2-phosphonobutyric acid, 4-phosphonobutyric acid, amine tri(methylenephosphonic) acid, ethylenediamine tetra(methylenephosphonic) acid, hexamethylene diamine tetra(methylenephosphonic) acid, diethylene triamine penta(methylenephosphonic acid, etc.

Among the polymers which can be used in the compositions according to the present invention, preferred are polymers and copolymers of olefins of general formula

R′ - CH = CH₂

wherein R′ is hydrogen or a (C₁₋₈)-alkyl or (C₆₋₁₀)-aryl radical, in particular:
(1) isotactic or prevailingly isotactic polypropylene;
(2) HDPE, LLDPE and LDPE polyethylene;
(3) crystalline copolymers of propylene and minor amounts of ethylene and/or of other alpha-olefins, such as, e.g., 1-butene, 1-hexene, 1-octene, 4-methyl-1-pentene;
(4) heterophasic compositions comprising (A) a fraction constituted by a propylene homopolymer, or by one of the copolymers defined under (3); and (B) a copolymeric fraction constituted by elastomeric copolymers of ethylene and an alpha-olefin, optionally containing minor proportions of one or more dienes, wherein the alpha-olefin is preferably selected from propylene and 1-butene; and
(5) elastomeric copolymers of ethylene and alpha-olefin(s), optionally containing minor proportions of one or more dienes.

Examples of dienes more commonly contained in said elastomeric copolymers are butadiene, ethylidene-norbornene and hexadiene-1,4.

Among the polymers of olefins of general formula R′-CH=CH₂ wherein R′ is an aryl radical, "crystal" and impact-resistant polystyrene are preferred.

Other examples of polymers which can be used are acrylonitrile/butadiene/styrene terpolymers (ABS); styrene/acrylonitrile copolymers (SAN); polyurethanes (of polyester or polyether grade); poly(ethylene terephthalate); poly(butylene terephthalate); polyamides; etc.

The self-extinguishing compositions according to the present invention can be prepared according to methods known in the art. For example, ammonium and/or amine phosphate and/or phosphonate is first intimately mixed with one or more finely ground nitrogen-containing compounds of general formula (I) (the particles of which generally are smaller than 70 µm) and the thus obtained mixture is added to the polymer in a turbo-mixer, in order to generate a homogeneous mixture which is either extruded or granulated. The thus obtained granular product can be transformed into various finished articles according to any of the well-known moulding techniques.

The fire-retardant additives according to the present invention are also suitable for use in the field of flame-retardant paints.

The following examples illustrate the present invention without limiting it.

### Example 1

184.5 g of cyanuric chloride and 800 ml of acetone were placed in a 31-reactor equipped with stirrer, thermometer, charging funnel, reflux condenser and heating bath.

The reaction mixture was heated with stirring to 40°C until a solution was obtained, then 284 g of a solution of ammonia at 30% by weight were added over 1 hour and 30 minutes, with the temperature being kept at 40°C. The reaction mixture then was heated to 45°C and kept at this temperature for 4 hours.

After cooling, the formed product was filtered off and washed, on the same filter, with water.

After oven-drying at 50-60°C under vacuum, 113 g of the intermediate of formula (VII): 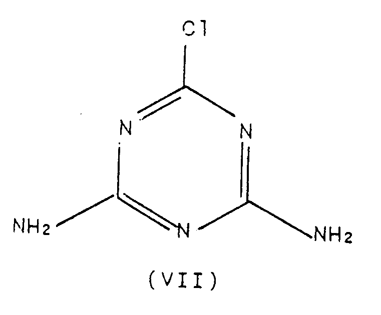
were obtained as white, crystalline, non-melting powder containing 24.12% of chlorine (theoretical value = 24.36%).

The structure of this compound was further confirmed by means of I.R.-spectroscopy.

72.8 g of intermediate (VII), 350 g of water and then, with stirring, 74 g of N,N-bis (methoxyethyl) amine were placed in a 1l-reactor equipped with stirrer, thermometer, charging funnel, reflux condenser and heating bath.

The reaction mixture was heated to its boiling temperature and kept under reflux conditions for 4 hours.

Then the reaction mixture was kept under reflux conditions for a further 8 hours, with 20 g of sodium hydroxide in 50 g of water being added portionwise so as to keep the pH value of the reaction mixture within the range of from 7 to 8.

The reaction mixture was cooled to room temperature, and the formed product was filtered off and then washed with water on the filter.

After drying the filter cake in a vacuum oven at 60°C, 90 g of the product of formula 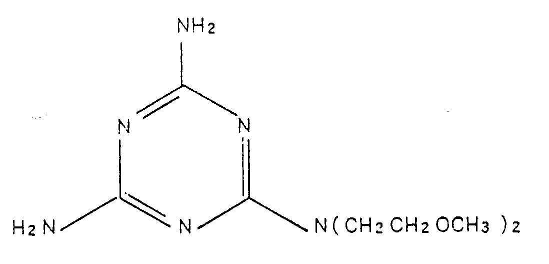
were obtained as white crystalline powder having a melting point (m.p.) of 124-128°C.

### Example 2

91 g of intermediate (VII), 240 ml of toluene and 119.6 g of morpholine were placed in the apparatus described in example 1.

The reaction mixture was heated at 65-70°C and kept at this temperature for 2 hours. The temperature then was increased to the reflux temperature, and the reaction mixture was refluxed for 1 hour.

Thereafter, the reaction mixture was allowed to cool down to room temperature and then the formed product was filtered off. The filter cake was washed with large amounts of water and, after drying, 82 g of the product of formula 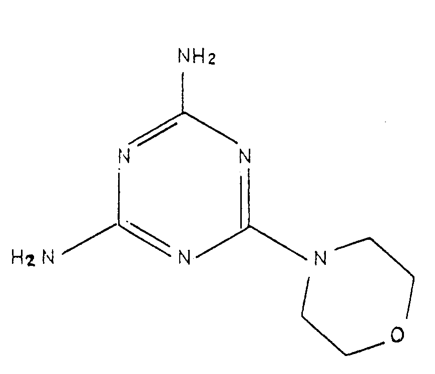
were obtained as white crystalline powder (m.p. = 248-250°C).

### Example 3

184.5 g of cyanuric chloride and 1300 ml of methylene chloride were placed in the apparatus of example 1, which initially was equipped with a cooling bath.

With the reaction mixture being cooled from the outside, 87.2 g of morpholine and 40 g of sodium hydroxide, dissolved in 150 ml of water, were simultaneously added thereto over 3 hours, with the pH of said reaction mixture being kept within the range of from 5 to 7, and the temperature being kept within the range of from 0 to 3°C.

The temperature was kept within the above range of from 0 to 3°C for a further 3 hours, and then the aqueous phase was separated.

By distilling off methylene chloride, 230 g of the intermediate of formula (VIII): 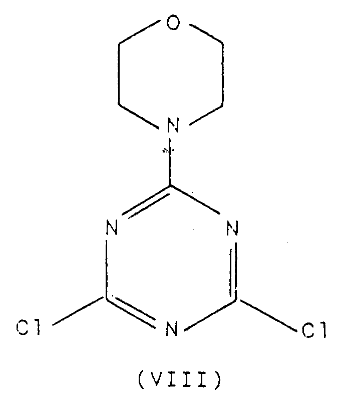
were obtained as white crystalline powder (m.p. = 155-157°C) of a purity of >98%, as determined by chromatography.

The chlorine content was 29.87% (theoretical value: 30.21%).

100 g of a solution of ammonium hydroxide at 30% by weight, 100 ml of water and 70.5 g of intermediate (VIII) were introduced into a 0.5 l-reactor equipped in the same way as the reactor of example 1.

The reaction mixture was heated to 50°C and kept at this temperature for 7 hours. Subsequently it was allowed to cool to room temperature, the obtained product was filtered off and the filter cake was washed with water.

By drying the filter cake, 58 g of the intermediate product of formula (IX): 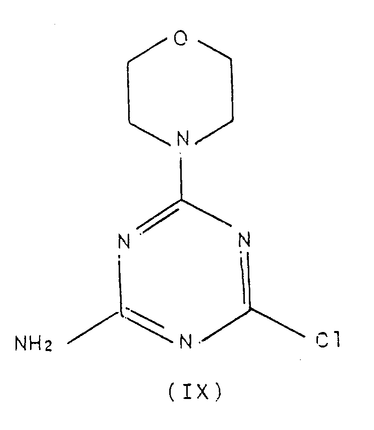
were obtained as white crystalline powder (m.p. = 189-191°C) having a chlorine content of 16.28% (theoretical value: 16.47%).

The structure of compounds (VIII) and (IX) was confirmed by I.R.-spectroscopy.

58 g of intermediate (IX) and 300 g of water and then, with stirring, 18 g of 2-amino ethanol were placed in the reaction equipment described above. The reaction mixture was heated to its boiling temperature and maintained under reflux conditions for 3 hours. Then, with said reaction mixture being kept under reflux for a further 3 hours, 11.8 g of sodium hydroxide in 50 g of water were added portionwise, so as to keep the pH value within the range of from 7 to 8. The reaction mass was cooled, the obtained product was filtered off and the filter cake washed with water.

After drying, 58 g of the product of formula 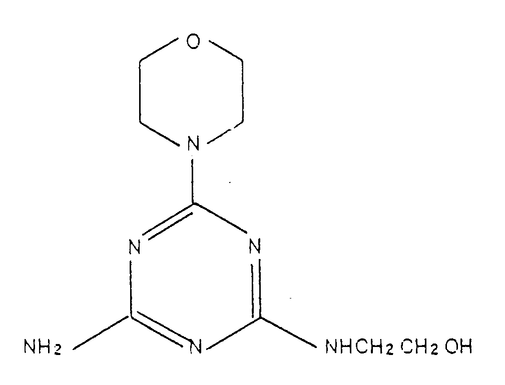
were obtained as white crystalline powder (m.p. = 159-161°C).

### Example 4

184.5 g of cyanuric chloride and 800 ml of methylene chloride were placed in a 2l-reactor equipped in the same way as those of the preceding examples.

With the reaction mixture kept cooled from the outside, 174 g of morpholine, dissolved in 150 g of water, were added, over 2 hours, to the reaction mixture which was kept at a temperature of from 4 to 5°C.

The temperature then was allowed to rise to 10°C and, with said temperature kept within the range of from 10 to 20°C, a solution of 80 g of sodium hydroxide in 200 g of water was added over 4 hours.

The reaction mass was kept at a temperature of 20°C for a further 2 hours, and then the aqueous phase was separated.

After distillation of methylene chloride, 270g of the intermediate of formula (X): 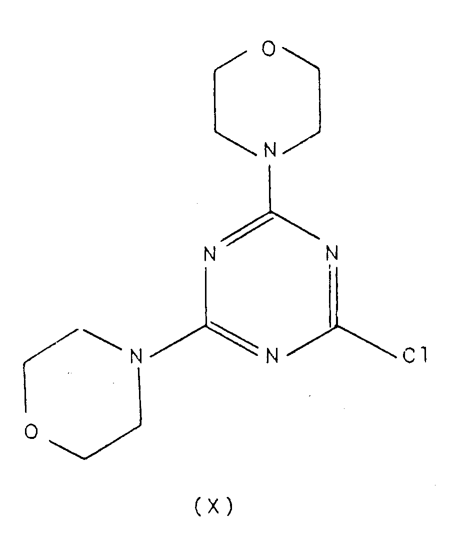
were obtained as white crystalline powder (m.p. = 172-174°C) having a chlorine content of 12.26% (theoretical value: 12.43%).
57 g of intermediate (X), 600 g of water and, with stirring, 23 g of N,N-dihydroxyethylamine were placed in the same reaction equipment as disclosed above.

The reaction mixture was heated to its boiling temperature and kept under reflux conditions for 2 hours. Then 8 g of sodium hydroxide, dissolved in 80 g of water, were added. After said addition, the reaction mixture was kept refluxing for a further 4 hours.

Thereafter the reaction mass was cooled to room temperature and filtered and the filter cake was washed with water.

By drying the filter cake, 65 g of product of formula 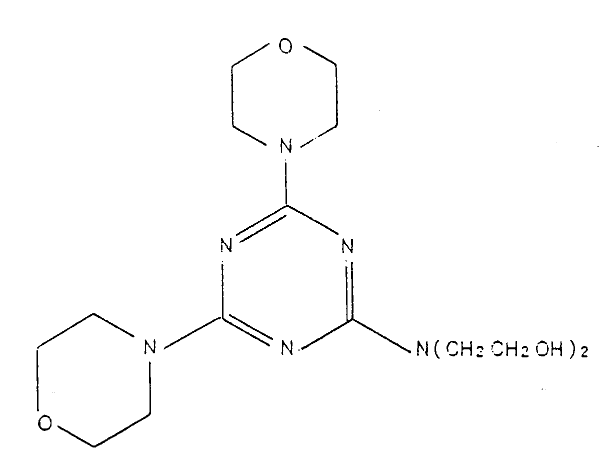
were obtained as white crystalline powder (m.p. = 179-181°C).

### Example 5

129 g of cyanuric chloride, 400 ml of acetone and 500 g of ice were placed in the reaction equipment described in example 4.

With the temperature of the reaction mixture kept within the range of from 3 to 5°C, 105 g of 2-methylaminoethanol were added over about 2 hours, and then the reaction mixture was kept stirred at 5°C for 1 hour. With the reaction mixture still kept at a temperature of 5°C, 118 g of sodium bicarbonate were added within 30 minutes. The reaction mixture was kept stirred at 5°C for a further 30 minutes, then its temperature was increased up to 35-40°C and was maintained at this value for 3 hours.

Then 67 g of morpholine were added and, after having installed a suitable distillation column, the reaction mixture was further heated so as to cause acetone contained in the reaction mass to distill off. Said operation required a total of about 2 hours.

After the internal temperature had reached 100°C, a solution of 28 g of sodium hydroxide in 50 g of water was added within 2 hours.

The reaction mixture was maintained under reflux conditions for a further 2 hours, then was allowed to cool down to room temperature.

The obtained product was filtered off, washed with water and dried.

Thus 200 g of product of formula 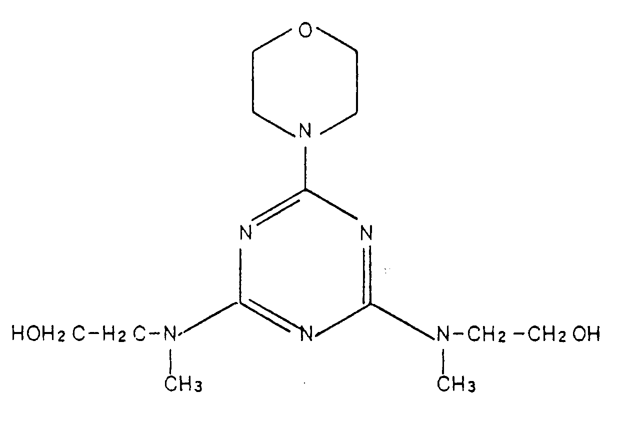
were obtained as white crystalline powder (m.p. = 91-92°C).

### Example 6

28.8 g of tert-butylamine, 600 g of water and 20.3 g of sodium carbonate were placed in the reaction equipment described in example 1.

The reaction mixture was heated to 85°C and then 80.9 of intermediate (IX) were added portionwise within about 30 minutes.

The reaction mixture was heated to boiling temperature and maintained under reflux conditions for 5 hours.

Then the reaction mixture was allowed to cool to room temperature, the obtained product was filtered off and the filter cake was washed with water.

After drying, 75.5 g of product of formula 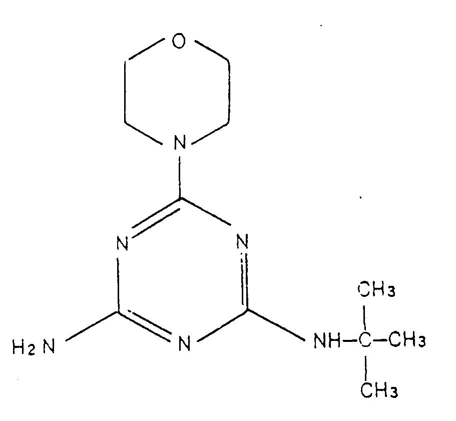
were obtained as white crystalline powder (m.p. = 145-151°C).

### Example 7

129 g of cyanuric chloride and 1000 ml of methylene chloride were placed in a 2l-reactor equipped in the same way as those of the preceding examples.

With the solution kept at a temperature of from 0 to 2°C by external cooling, 40 g of 3-amino-1-propene, dissolved in 150 g of water, were added over 90 minutes.

With the temperature maintained within the range of from 0 to 2°C, 28 g of sodium hydroxide, dissolved in 100 g of water, were added over about 2 hours. The reaction mixture then was kept stirred at 3-5°C for a further 2 hours, whereafter the water phase was separated.

By distilling off methylene chloride, 137 g of the intermediate of formula (XI): 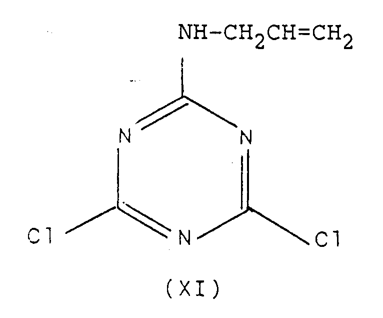
were obtained as white crystalline powder (m.p. = 70-72°C) having a chlorine content of 34.52% (theoretical value 34.63%).

200 g of a solution of ammonium hydroxide at 30% by weight and 500 g of water were placed in the above reaction equipment. The mass was heated to 40°C, then 123 g of intermediate (XI) were added over 30 minutes, with the temperature still being kept at 40°C.

Then the temperature was increased to 45°C, and maintained at said value for about 6 hours.

At the end the reaction mixture was cooled to room temperature and the obtained product was filtered off. The filter cake was washed with water and dried.

104 g of the intermediate of formula (XII): 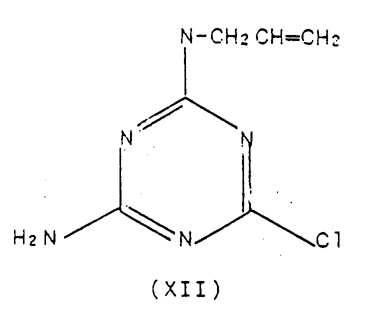
were obtained as white crystalline powder (m.p. = 168-170°C) having a chlorine content of 19.03% (theoretical value: 19.14%).

The structure of compounds (XI) and (XII) was confirmed by NMR analysis.

300 g of water and 55.7 g of intermediate (XII) and then, with stirring, 26.2 g of morpholine were placed in a 0.5l-reactor equipped in the same way as disclosed above.

The reaction mixture was heated to reflux temperature and was kept under reflux conditions for about 3 hours. With the temperature being still kept at the same value, 12 g of sodium hydroxide, dissolved in 50 g of water, were subsequently added over 3 hours, in a manner such as to keep th pH value of the reaction mixture within the range of from 7 to 8.

Thereafter the reaction mass was cooled to room temperature, the obtained product was filtered off, and the filter cake was washed with water on the same filter.

After drying, 64 g of product of formula 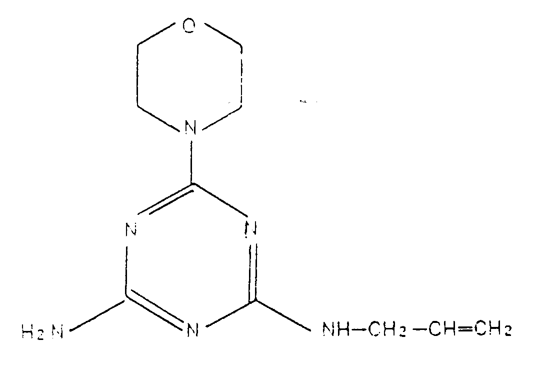
were obtained as white crystalline powder (m.p. = 146-148°C).

### Examples 8 - 26

By operating under conditions analogous to those described in examples 1 to 7, the compounds of general formula (I) reported in the following Table 1 were prepared.

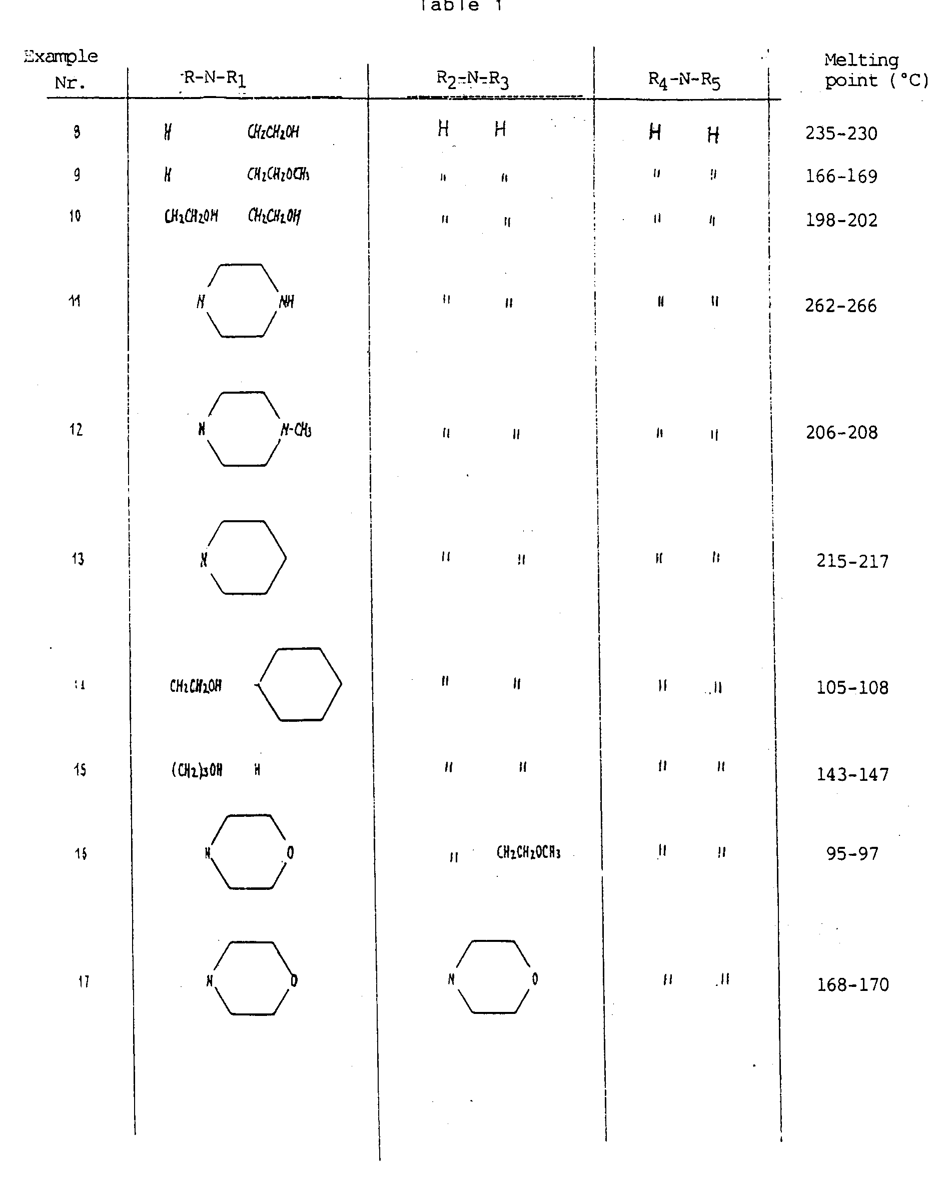

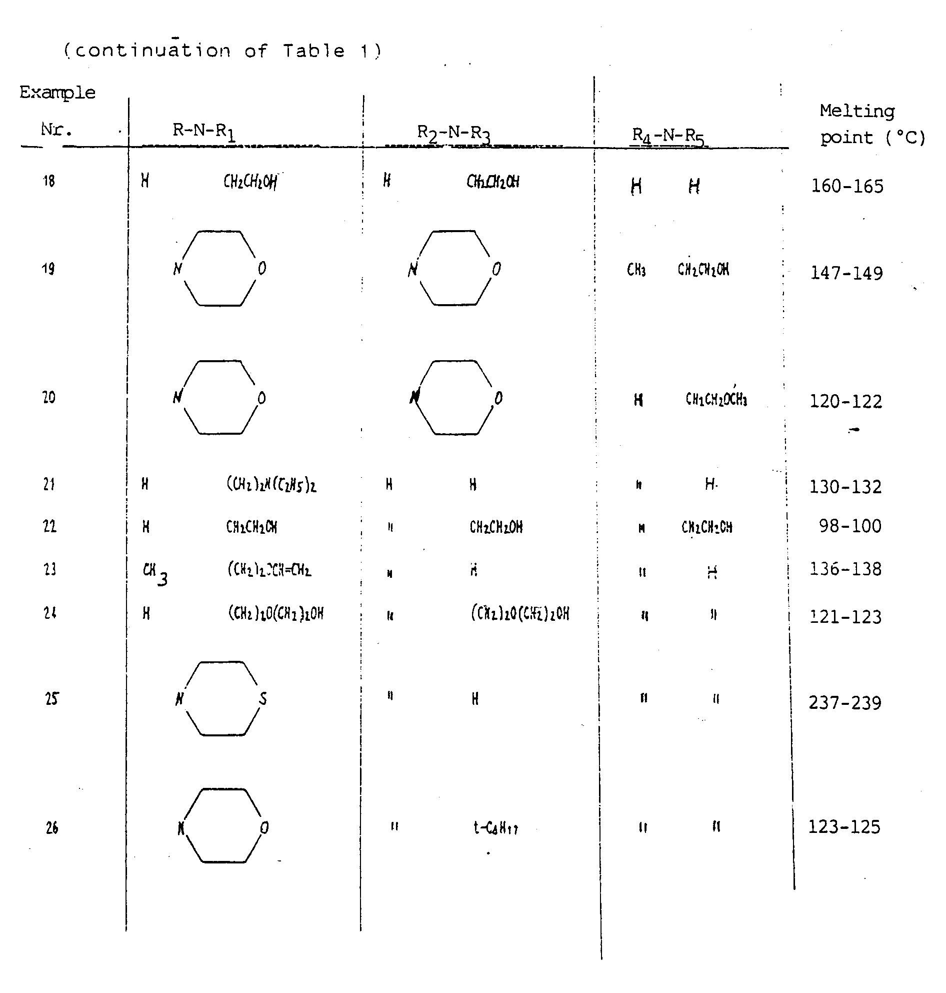

### Examples 27 to 72

The tests reported in the following Tables 2 and 3 relate to polymeric compositions containing the product of general formula (I) prepared according to the preceding examples.

Specimen having the shape of small slabs of about 3 mm of thickness were prepared by moulding mixtures of granular polymer and additives on a MOORE platen press, with a moulding cycle of 7 minutes and a moulding pressure of about 40 kg/cm².

On the slab specimen thus obtained the level of self-extinguishment was determined by measuring the oxygen index (L.O.I. according to ASTM D-2863-77 in a Stanton Redcroft instrument) and by applying the "Vertical Burning Test" which makes it possible to classify the material according to three rating levels 94 V-0, 94 V-1 and 94 V-2 according to the UL 94 standard (issued by Underwriters Laboratories - U.S.A.).

In Table 2 the values which were obtained by using an isotactic polypropylene in flake form and having a melt flow index of 12 and an insoluble fraction in boiling n-heptane of 96% by weight are reported.

In Table 3 there are reported the values which were obtained by using low-density polyethylene in granular form with a melt flow index of 7; polystyrene granules containing 5% by weight of butadiene rubber and having a melt flow index of 9; thermoplastic polyurethane granules, of polyester grade (ESTANE 54600 ® by Goodrich) or of polyether grade (ESTANE 58300 ® by Goodrich), having respective specific gravities of 1.19 and 1.10 g/cm³; an ethylene-propylene elastomeric copolymer containing 45% by weight of propylene; and an acrylonitrile-butadiene-styrene terpolymer having a specific gravity of 1.06 g/cm³ and a melt flow index of 1.6, and containing about 40% of each acrylonitrile and styrene and 20% of butadiene.

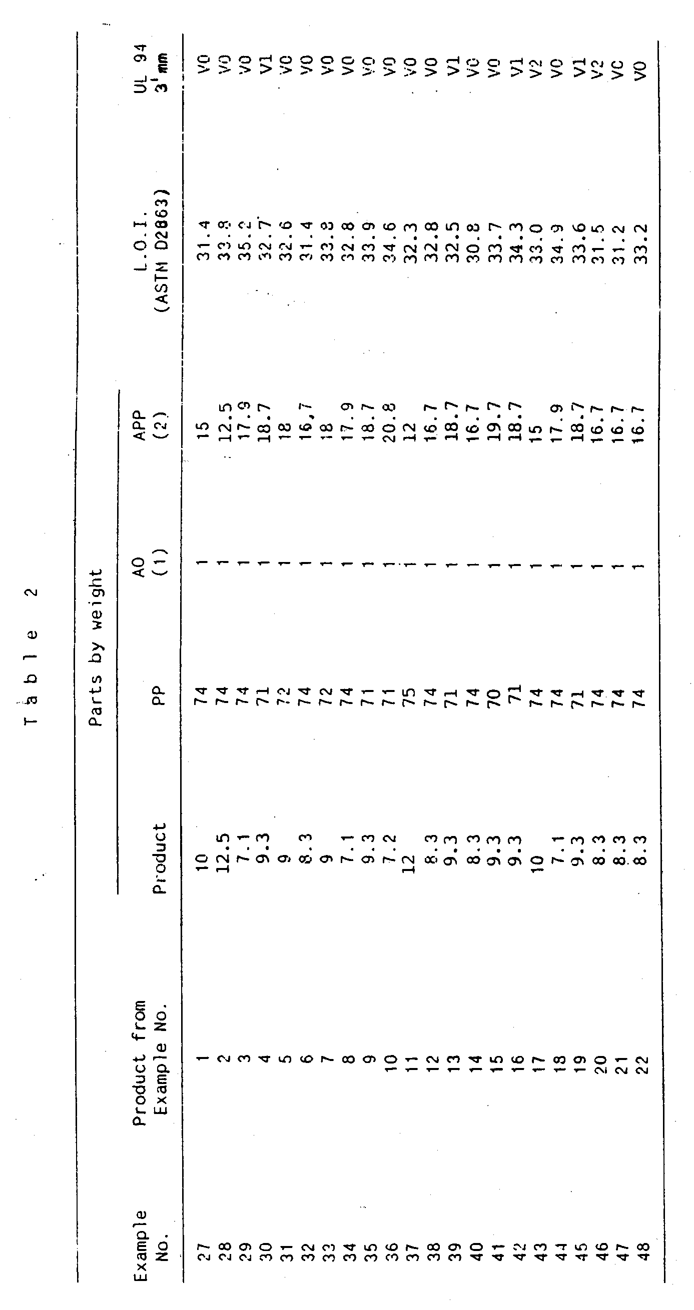

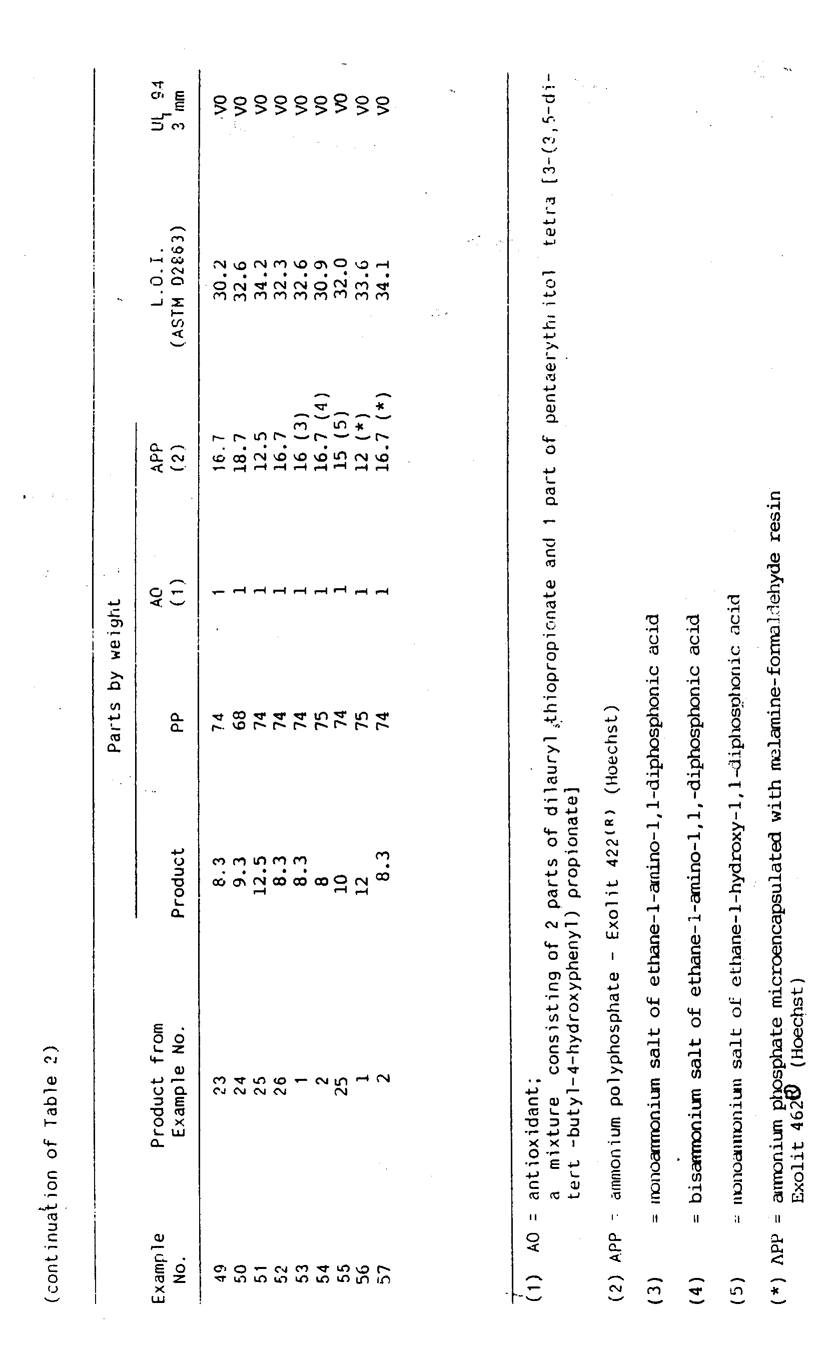

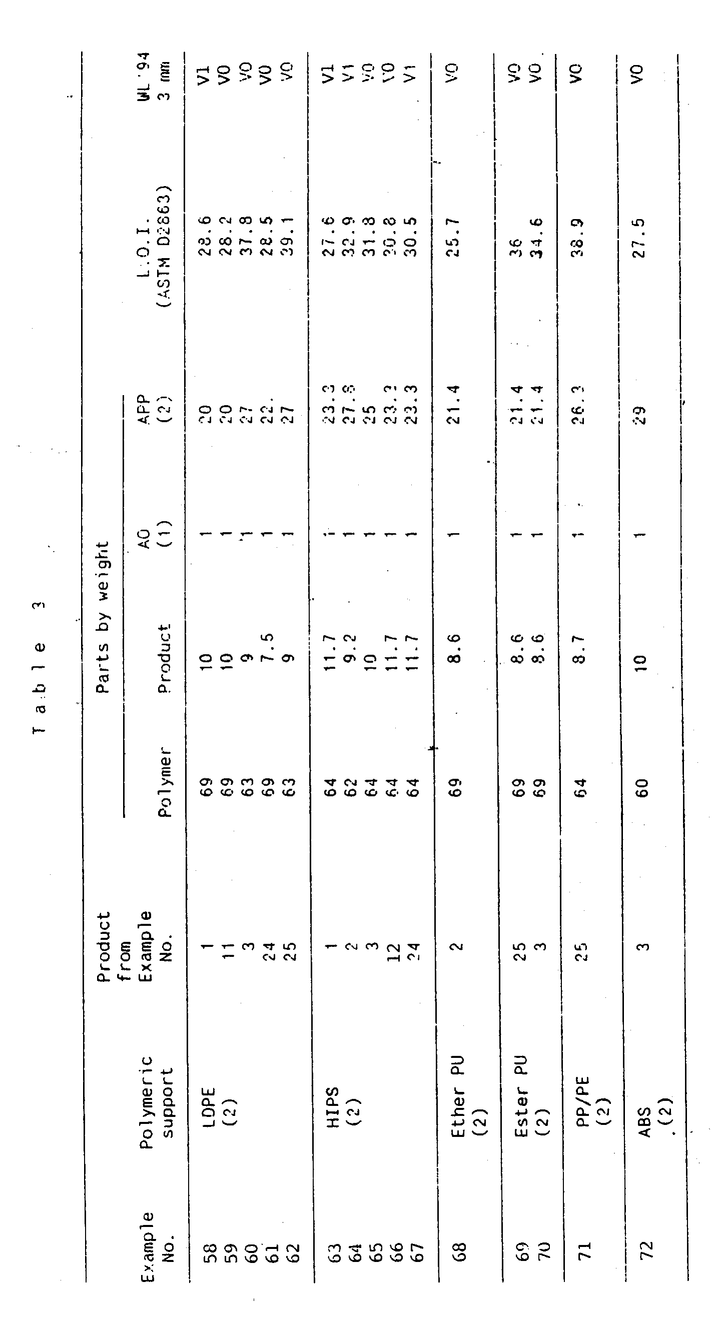

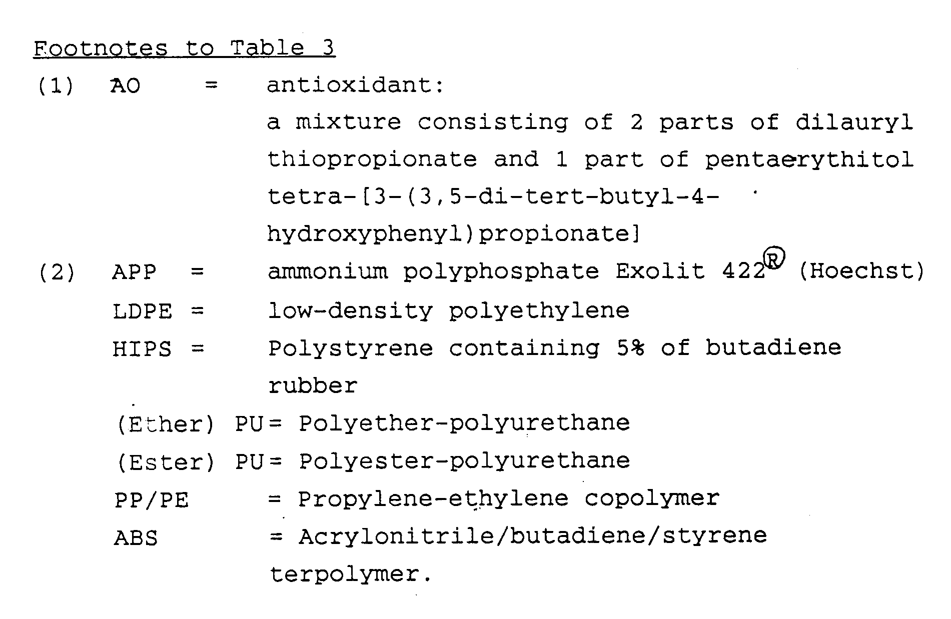

### Example 73 (Comparative Example)

By following the same procedure as in examples 27 to 57, but with 2,4,6-triamino-1,3,5-triazine being used as the nitrogen-containing compound [2,4,6-triamino-1,3,5-triazine corresponds to the compound of general formula (I), wherein all groups R to R₅ are hydrogen], the following composition was prepared:

| | |
|---|---|
| - Polypropylene | 74 parts by weight |
| - Antioxidant | 1 parts by weight |
| - Ammonium polyphosphate | 16.7 parts by weight |
| - 2,4,6,-triamino-1,3,5-triazine | 9 parts by weight |

By using the above composition, specimen were prepared and tested for their self-extinguishing properties, according to the method disclosed above.

The following results were obtained:

| | |
|---|---|
| L.O.I. | 25.2 |
| UL 94 (3 mm) | Class B (the specimen burns). |

## Claims (Claims for the following Contracting State(s): AT, BE, CH, DE, DK, FR, GB, LI, NL, SE)

1. Self-extinguishing polymeric compositions comprising:
(a) from 89 to 45 parts by weight of thermoplastic polymer and/or of polymer endowed with elastomeric properties;
(b) from 8 to 30 parts by weight of one or more compounds selected from ammonium and amine phosphates and/or ammonium and amine phosphonates;
(c) from 3 to 25 parts by weight of one or more 2,4,6-triamino-1,3,5-triazine derivatives of general formula (I): 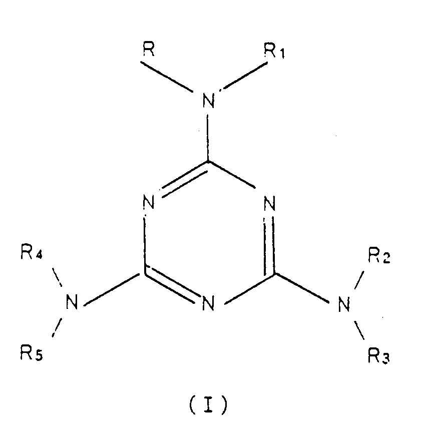
wherein:
at least one of the radicals R to R₅ is:
⁅C-ₙH₂ₙ⁆O-R₆;
or 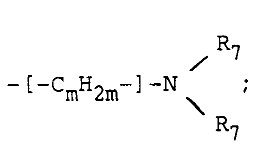 wherein:
n = an integer of from 2 to 8;
m = an integer of from 2 to 6;
R₆ = H, (C₁₋₈)-alkyl, (C₂₋₆)-alkenyl or ⁅CₚH₂ₚ⁆O-R₈,
wherein p is an integer of from 1 to 4 and R₈ is H, (C₁₋₄)-alkyl, (C₆₋₁₂)-cycloalkyl or C₆₋₁₂)-alkylcycloalkyl;
the radicals R₇, the same or different from one another, represent
H, (C₁₋₈)-alkyl, (C₂₋₆)-alkenyl, (C₆₋₁₂)-cycloalkyl, (C₆₋₁₂)-alkylcycloalkyl or (C₁₋₄)-hydroxyalkyl;
or the moiety 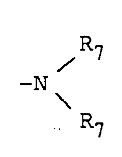 is replaced by an N-heterocyclic radical linked to the alkyl chain through the nitrogen atom, said radical optionally containing at least one other heteroatom;
or in general formla (I) at least one of the moieties 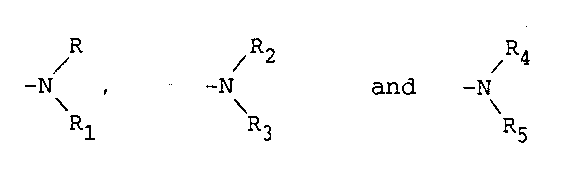 is replaced by an N-heterocyclic radical linked to the triazine ring through the nitrogen atom and optionally containing at least one other heteroatom;
the remaining radicals R to R₅, identical or different from one another, have the above meanings, or represent
H, (C₁₋₁₈)-alkyl, (C₂₋₈)-alkenyl, (C₆₋₁₆)-cycloalkyl or (C₆₋₁₆)-alkylcycloalkyl, optionally substituted with one or more hydroxy groups.

2. Compositions according to claim 1, wherein at least one of the moieties 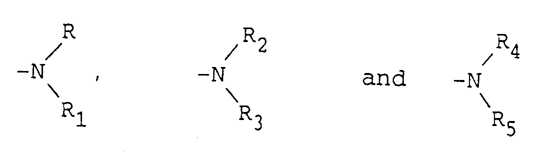 in general formula (I) is replaced by a heterocyclic radical selected from
aziridinyl, pyrrolidinyl, piperidinyl, morpholinyl, thiomorpholinyl, piperazinyl, 4-methyl piperazinyl, 4-ethyl piperazinyl, 2-methyl piperazinyl, 2,5-dimethyl piperazinyl, 2,3,5,6-tetramethyl piperazinyl, 2,2,5,5-tetramethyl piperazinyl, 2-ethyl piperazinyl and 2,5-diethyl piperazinyl.

3. Compositions according to any of claims 1 and 2, wherein at least one of the radicals R to R₅ in general formula (I) is replaced by:
⁅CₙH₂ₙ⁆O-R₆
wherein:
n is an integer of from 2 to 4 and R₆ is (C₁₋₄)-alkyl.

4. Compositions according to any of the preceding claims, wherein one or two of the moieties 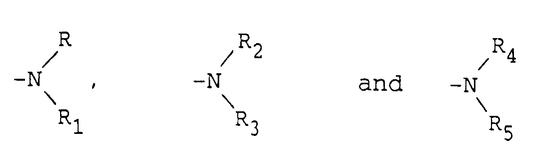 in the compounds of general formula (I) is (are) -NH₂ groups.

5. Compositions according to any of the preceding claims, wherein the moiety 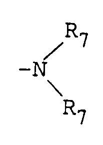 in general formula (I) is replaced by a heterocyclic radical selected from
aziridinyl, pyrrolidinyl, piperidinyl, morpholinyl, thiomorpholinyl, piperazinyl, 4-methyl piperazinyl and 4-ethyl piperazinyl.

6. Compositions according to any of the preceding claims, wherein the ammonium phosphates (b) have the general formula
(NH₄)ₙ₊₂PₙO₃ₙ₊₁
wherein n is an integer of at least 2; or
the general formula
(NH₄PO₃)ₙ
wherein n ranges from 50 to 500.

7. Compositions according to any of claims 1 to 5, wherein the amine phsophates (b) are selected from diethylammonium phosphate, diethylamine phosphate, ethylene diamine phosphate, melamine orthophosphate and melamine pyrophosphate.

8. Compositions according to any of claims 1 to 5, wherein the mono- or polyammonium phosphonates (b) are selected from the salts derived from mono- or polyphosphonic acids.

9. Compositions according to any of claims 1 to 8, wherein the polymer (a) is selected from acrylonitrile/butadiene/styrene terpolymers; styrene/acrylonitrile copolymers; polyurethanes; poly(ethylene terephthalate); poly(butylene terephthalate), polyamides; and polymers and copolymers of olefins of general formula
R′ - CH = CH₂
wherein R′ is a hydrogen atom or a (C₁₋₈)-alkyl or (C₆₋₁₀)-aryl radical,
particularly:
(1) isotactic or prevailingly isotactic polypropylene;
(2) HDPE, LLDPE and LDPE polyethylene;
(3) crystalline copolymers of propylene and minor amounts of ethylene and/or other alpha-olefins, such as, e.g., 1-butene, 1-hexene, 1-octene and 4-methyl-1-pentene;
(4) heterophasic compositions comprising (A) a fraction constituted by a propylene homopolymer or one of the copolymers specified under item (3) above; and (B) a copolymeric fraction constituted by elastomeric copolymers of ethylene and an alpha-olefin, optionally containing minor amounts of diene, wherein the alpha-olefin is preferably selected from propylene and 1-butene; and
(5) elastomeric copolymers of ethylene and alpha-olefin(s), optionally containing minor amounts of diene.

10. Moulded articles obtained from the compositions according to the preceding claims.

## Claims (Claims for the following Contracting State(s): ES)

1. A process for preparing self-extinguishing polymeric compositions, characterized in that
(a) from 89 to 45 parts by weight of thermoplastic polymer and/or of polymer endowed with elastomeric properties
are combined with
(b) from 8 to 30 parts by weight of one or more compounds selected from ammonium and amine phosphates and/or ammonium and amine phosphonates
and
(c) from 3 to 25 parts by weight of one or more 2,4,6-triamino-1,3,5-triazine derivatives of general formula (I): 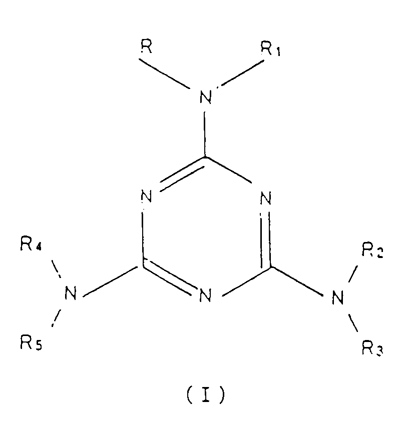
wherein:
at least one of the radicals R to R₅ is:
⁅C-ₙH₂ₙ⁆O-R₆;
or 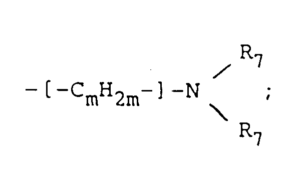 wherein:
n = an integer of from 2 to 8;
m = an integer of from 2 to 6;
R₆ = H, (C₁₋₈)-alkyl, (C₂₋₆)-alkenyl or ⁅CₚH₂ₚ⁆O-R₈,
wherein p is an integer of from 1 to 4 and R₈ is H, (C₁₋₄)-alkyl, (C₆₋₁₂)-cycloalkyl or (C₆₋₁₂)-alkylcycloalkyl;
the radicals R₇, the same or different from one another, represent
H, (C₁₋₈)-alkyl, (C₂₋₆)-alkenyl, (C₆₋₁₂)-cycloalkyl, (C₆₋₁₂)-alkylcycloalkyl or (C₁₋₄)-hydroxyalkyl;
or the moiety 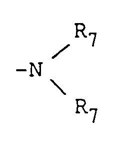 is replaced by an N-heterocyclic radical linked to the alkyl chain through the nitrogen atom, said radical optionally containing at least one other heteroatom; or in general formla (I) at least one of the moieties 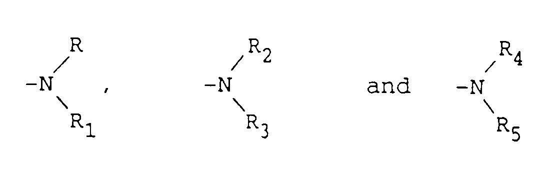 is replaced by an N-heterocyclic radical linked to the triazine ring through the nitrogen atom and optionally containing at least one other heteroatom;
the remaining radicals R to R₅, identical or different from one another, have the above meanings, or represent
H, (C₁₋₁₈)-alkyl, (C₂₋₈)-alkenyl, (C₆₋₁₆)-cycloalkyl or (C₆₋₁₆)-alkylcycloalkyl, optionally substituted with one or more hydroxy groups,
and the thus obtained composition is preferably either extruded or granulated.

2. The process according to claim 1, characterized in that at least one of the moieties 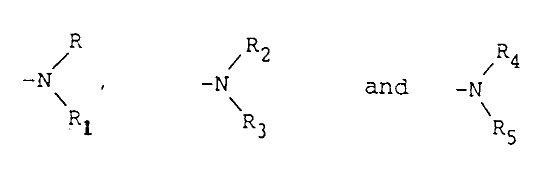 in general formula (I) is replaced by a heterocyclic radical selected from
aziridinyl, pyrrolidinyl, piperidinyl, morpholinyl, thiomorpholinyl, piperazinyl, 4-methyl piperazinyl, 4-ethyl piperazinyl, 2-methyl piperazinyl, 2,5-dimethyl piperazinyl, 2,3,5,6-tetramethyl piperazinyl, 2,2,5,5-tetramethyl piperazinyl, 2-ethyl piperazinyl and 2,5-diethyl piperazinyl.

3. The process according to any of the claims 1 and 2, characterized in that at least one of the radicals R to R₅ in general formula (I) is replaced by:
⁅CₙH₂ₙ⁆O-R₆
wherein:
n is an integer of from 2 to 4 and R₆ is (C₁₋₄)-alkyl.

4. The process according to any of the preceding claims, characterized in that one or two of the moieties 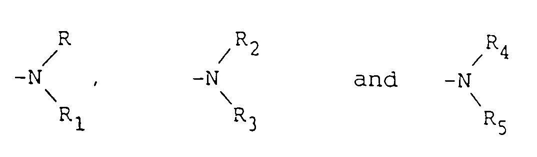 in the compounds of general formula (I) is (are) -NH₂ groups.

5. The process according to any of the preceding claims, characterizd in that the moiety 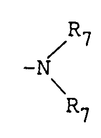 in general formula (I) is replaced by a heterocyclic radical selected from
aziridinyl, pyrrolidinyl, piperidinyl, morpholinyl, thiomorpholinyl, piperazinyl, 4-methyl piperazinyl and 4-ethyl piperazinyl.

6. The process according to any of the preceding claims, characterized in that the ammonium phosphates (b) have the general formula
(NH₄)ₙ₊₂PₙO₃ₙ₊₁
wherein n is an integer of at least 2; or
the general formula
(NH₄PO₃)ₙ
wherein n ranges from 50 to 500.

7. The process according to any of claims 1 to 5, characterized in that the amine phosphates (b) are selected from diethylammonium phosphate, diethylamine phosphate, ethylene diamine phosphate, melamine orthophosphate and melamine pyrophosphate.

8. The process according to any of claims 1 to 5, characterized in that the mono- or polyammonium phosphates (b) are selected from the salts derived from mono- or polyphosphonic acids.

9. The process according to any of claims 1 to 8, characterized in that the polymer (a) is selected from acrylonitrile/butadiene/styrene terpolymers; styrene/acrylonitrile copolymers; polyurethanes; poly(ethylene terephthalate); poly(butylene terephthalate), polyamides; and polymers and copolymers of olefins of general formula
R' - CH = CH₂
wherein R' is a hydrogen atom or a (C₁₋₈)-alkyl or (C₆₋₁₀)-aryl radical,
particularly:
(1) isotactic or prevailingly isotactic polypropylene;
(2) HDPE, LLDPE and LDPE polyethylene;
(3) crystalline copolymers of propylene and minor amounts of ethylene and/or other alpha-olefins, such as, e.g., 1-butene, 1-hexene, 1-octene and 4-methyl-1-pentene;
(4) heterophasic compositions comprising (A) a fraction constituted by a propylene homopolymer or one of the copolymers specified under item (3) above; and (B) a copolymeric fraction constituted by elastomecic copolymers of ethylene and an alpha-olefin, optionally containing minor amounts of diene, wherein the alpha-olefin is preferably selected from propylene and 1-butene; and
(5) elastomeric copolymers of ethylene and alpha-olefin(s), optionally containing minor amounts of diene.

10. A process for preparing moulded articles, characterized in that the product obtained according to any one of the preceding claims is transformed into said moulded articles according to any of the well-known moulding techniques.

11. Self-extinguishing polymeric compositions comprising:
(a) from 89 to 45 parts by weight of thermoplastic polymer and/or of polymer endowed with elastomeric properties;
(b) from 8 to 30 parts by weight of one or more compounds selected from ammonium and amine phosphates and/or ammonium and amine phosphonates;
(c) from 3 to 25 parts by weight of one or more 2,4,6-triamino-1,3,5-triazine derivatives of general formula (I): 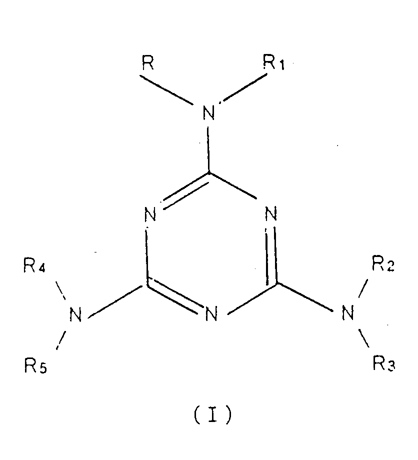
wherein:
at least one of the radicals R to R₅ is:
⁅C-ₙH₂ₙ⁆O-R₆;
or 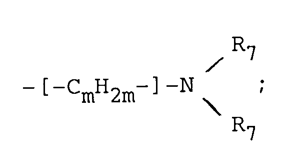 wherein:
n = an integer of from 2 to 8;
m = an integer of from 2 to 6;
R₆ = H, (C₁₋₈)-alkyl, (C₂₋₆)-alkenyl or ⁅CₚH₂ₚ⁆O-R₈,
wherein p is an integer of from 1 to 4 and R₈ is H, (C₁₋₄)-alkyl, (C₆₋₁₂)-cycloalkyl or C₆₋₁₂)-alkylcycloalkyl;
the radicals R₇, the same or different from one another, represent
H, (C₁₋₈)-alkyl, (C₂₋₆)-alkenyl, (C₆₋₁₂)-cycloalkyl, (C₆₋₁₂)-alkylcycloalkyl or (C₁₋₄)-hydroxyalkyl;
or the moiety 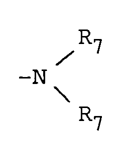 is replaced by an N-heterocyclic radical linked to the alkyl chain through the nitrogen atom, said radical optionally containing at least one other heteroatom;
or in general formla (I) at least one of the moieties 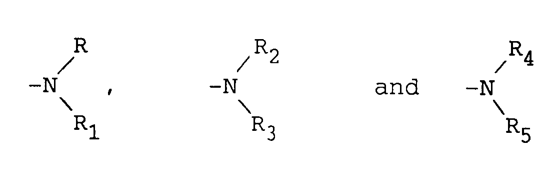 is replaced by an N-heterocyclic radical linked to the triazine ring through the nitrogen atom and optionally containing at least one other heteroatom;
the remaining radicals R to R₅, identical or different from one another, have the above meanings, or represent
H, (C₁₋₁₈)-alkyl, (C₂₋₈)-alkenyl, (C₆₋₁₆)-cycloalkyl or (C₆₋₁₆)-alkylcycloalkyl, optionally substituted with one or more hydroxy groups.

## Patentansprüche (Patentansprüche für folgende(n) Vertragsstaat(en): AT, BE, CH, DE, DK, FR, GB, LI, NL, SE)

1. Selbstverlöschende Polymer-Zusammensetzungen, umfassend:
(a) 89 bis 45 Gew.-Teile eines thermoplastischen Polymers und/oder eines Polymers, welches elastomere Eigenschaften aufweist;
(b) 8 bis 30 Gew.-Teile einer oder mehrerer Verbindungen, ausgewählt aus Ammonium- und Amin-Phosphaten und/oder Ammonium- und Amin-Phosphonaten;
(c) 3 bis 25 Gew.-Teile eines oder mehrerer 2,4,6-Triamino-1,3,5-triazin-Derivate mit der allgemeinen Formel (I): 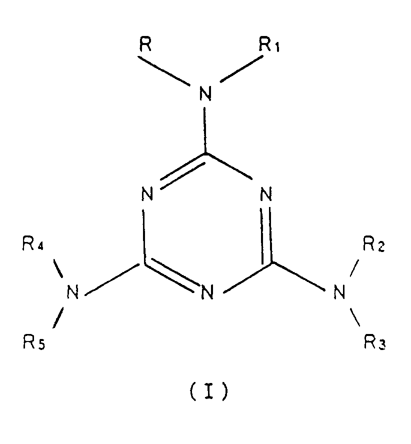
worin:
mindestens eines der Radikale R bis R₅ die folgende Bedeutung hat:
⁅CₙH₂ₙ⁆O-R₆;
oder 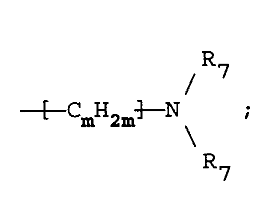 worin:
n eine ganze Zahl von 2 bis 8 ist;
m eine ganze Zahl von 2 bis 6 ist;
R₆ H, (C₁₋₈)-Alkyl, (C₂₋₆)-Alkenyl oder ⁅CₚH₂ₚ⁆O-R₈ bedeutet,
worin p eine ganze Zahl von 1 bis 4 ist und R₈ H, (C₁₋₄)-Alkyl, (C₆₋₁₂)-Cycloalkyl oder (C₆₋₁₂)-Alkylcycloalkyl bedeutet;
die Radikale R₇, die gleich oder voneinander verschieden sein können, für H, (C₁₋₈)-Alkyl, (C₂₋₆)-Alkenyl, (C₆₋₁₂)-Cycloalkyl, (C₆₋₁₂)-Alkylcycloalkyl oder (C₁₋₄)-Hydroxyalkyl stehen;
oder die Gruppe 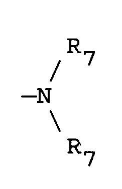 durch ein N-heterocyclisches Radikal ersetzt ist, welches über das Stickstoffatom an die Alkylkette gebunden ist, wobei dieses Radikal gegebenenfalls mindestens ein weiteres Heteroatom enthält;
oder in der allgemeinen Formel (I) mindestens eine der Gruppen 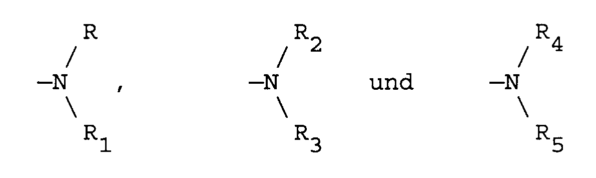 durch ein N-heterocyclischs Radikal ersetzt ist, welches über das Stickstoffatom an den Triazin-Ring gebunden ist und gegebenenfalls mindestens ein weiteres Heteroatom enthält;
und die restlichen Radikale R bis R₅, die gleich oder voneinander verschieden sein können, die obigen Bedeutungen haben oder für H, (C₁₋₁₈)-Alkyl, (C₂₋₈)-Alkenyl, (C₆₋₁₆)-Cycloalkyl oder (C₆₋₁₆)-Alkylcycloalkyl stehen, welche gegebenenfalls mit einer oder mehreren Hydroxylgruppen substituiert sind.

2. Zusammensetzungen gemäß Anspruch 1, worin mindestens eine der Gruppen 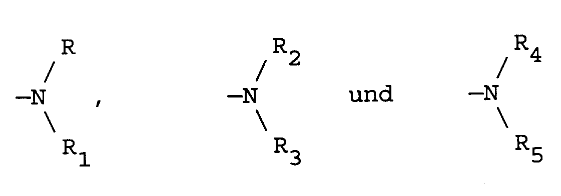 in der allgemeinen Formel (I) durch ein heterocyclisches Radikal ersetzt ist, welches ausgewählt ist aus Aziridinyl, Pyrrolidinyl, Piperidinyl, Morpholinyl, Thiomorpholinyl, Piperazinyl, 4-Methyl-piperazinyl, 4-Ethylpiperazinyl, 2-Methyl-piperazinyl, 2,5-Dimethyl-piperazinyl, 2,3,5,6-Tetramethyl-piperazinyl, 2,2,5,5-Tetramethyl-piperazinyl, 2-Ethyl-piperazinyl und 2,5-Diethylpiperazinyl.

3. Zusammensetzungen gemäß irgendeinem der Ansprüche 1 und 2, worin mindestens eines der Radikale R bis R₅ in der allgemeinen Formel (I) ersetzt ist durch:
⁅CₙH₂ₙ⁆O-R₆;
worin:
n eine ganze Zahl von 2 bis 4 und R₆ (C₁₋₄)-Alkyl ist.

4. Zusammensetzungen gemäß irgendeinem der vorausgehenden Ansprüche, worin eine oder mehrere der Gruppen 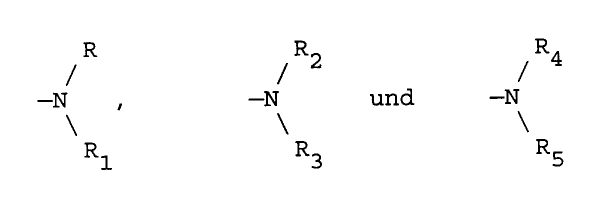 in den Verbindungen der allgemeinen Formel (I) eine -NH₂ -Gruppe ist (-NH₂ -Gruppen sind).

5. Zusammensetzungen gemäß irgendeinem der vorausgehenden Ansprüche, worin die Gruppe 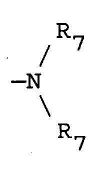 in der allgemeinen Formel (I) durch ein heterocyclisches Radikal ersetzt ist, welches ausgewählt ist aus Aziridinyl, Pyrrolidinyl, Piperidinyl, Morpholinyl, Thiomorpholinyl, Piperazinyl, 4-Methyl-piperazinyl und 4-Ethyl-piperazinyl.

6. Zusammensetzungen gemäß irgendeinem der vorausgehenden Ansprüche, worin die Ammonium-Phosphate (b) die allgemeine Formel
(NH₄)ₙ₊₂PₙO₃ₙ₊₁
besitzen, worin n eine ganze Zahl von mindestens 2 ist;
oder die allgemeine Formel
(NH₄PO₃)ₙ
besitzen, worin n im Bereich von 50 bis 500 liegt.

7. Zusammensetzungen gemäß irgendeinem der Ansprüche 1 bis 5, worin die Amin-Phosphate (b) ausgewählt sind aus Diethylammonium-Phosphat, Diethylamin-Phosphat, Ethylendiamin-Phosphat, Melamin-Orthophosphat und Melamin-Pyrophosphat.

8. Zusammensetzungen gemäß irgendeinem der Ansprüche 1 bis 5, worin die Mono- oder Poly-Ammonium-Phosphonate (b) aus Salzen ausgewählt sind, welche von Mono- oder Poly-Phosphonsäuren abgeleitet sind.

9. Zusammensetzungen gemäß irgendeinem der Ansprüche 1 bis 8, worin das Polymer (a) ausgewählt ist aus Acrylnitril/Butadien/Styrol-Terpolymeren; Styrol/Acrylnitril-Copolymeren; Polyurethanen; Polyethylenterephthalat; Polybutylenterephthalat; Polyamiden sowie aus Polymeren und Copolymeren von Olefinen der allgemeinen Formel
R'-CH=CH₂
worin R' ein Wasserstoffatom, ein (C₁₋₈)-Alkyl- oder ein (C₆₋₁₀)-Aryl-Radikal ist,
insbesondere aus:
(1) isotaktischem oder vorwiegend isotaktischem Polypropylen;
(2) HDPE, LLDPE und LDPE-Polyethylen;
(3) kristallinen Copolymeren des Propylens mit geringen Mengen von Ethylen und/oder anderen alpha-Olefinen, wie z.B. 1-Buten, 1-Hexen, 1-Octen und 4-Methyl-1-penten;
(4) Heterophasen-Zusammensetzungen, umfassend: (A) eine Fraktion, welche ein Propylen-Homopolymer oder eines der unter dem obigen Punkt (3) spezifizierten Copolymere beinhaltet; und (B) eine Copolymer-Fraktion, welche elastomere Copolymere des Ethylens mit einem alpha-Olefin, die gegebenenfalls kleine Mengen eines Diens enthalten, beinhaltet, wobei das alpha-Olefin vorzugsweise aus Propylen und 1-Buten ausgewählt ist; und
(5) elastomeren Copolymeren des Ethylens mit alpha-Olefin(en), die gegebenenfalls geringe Mengen eines Diens enthalten.

10. Formkörper, erhalten aus den Zusammensetzungen gemäß den vorausgehenden Ansprüchen.

## Patentansprüche (Patentansprüche für folgende(n) Vertragsstaat(en): ES)

1. Verfahren zur Herstellung von selbstverlöschenden Polymer-Zusammensetzungen, dadurch gekennzeichnet, daß
(a) 89 bis 45 Gew.-Teile eines thermoplastischen Polymers und/oder eines Polymers, welches elastomere Eigenschaften aufweist;
kombiniert werden mit
(b) 8 bis 30 Gew.-Teilen einer oder mehrerer Verbindungen, ausgewählt aus Ammonium- und Amin-Phosphaten und/oder Ammonium- und Amin-Phosphonaten;
und
(c) 3 bis 25 Gew.-Teilen eines oder mehrerer 2,4,6-Triamino-1,3,5-triazin-Derivate mit der allgemeinen Formel (I): 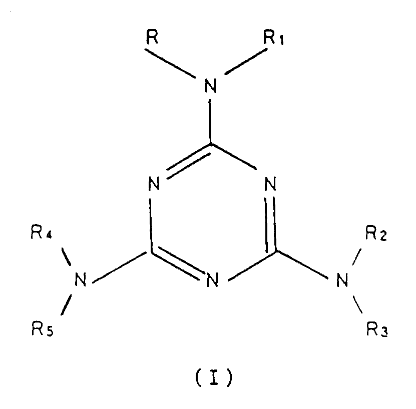
worin:
mindestens eines der Radikale R bis R₅ die folgende Bedeutung hat:
⁅CₙH₂ₙ⁆O-R₆;
oder 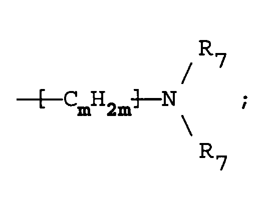 worin:
n eine ganze Zahl von 2 bis 8 ist;
m eine ganze Zahl von 2 bis 6 ist;
R₆ H, (C₁₋₈)-Alkyl, (C₂₋₆)-Alkenyl oder ⁅CₚH₂ₚ⁆O-R₈ bedeutet,
worin p eine ganze Zahl von 1 bis 4 ist und R₈ H, (C₁₋₄)-Alkyl, (C₆₋₁₂)-Cycloalkyl oder (C₆₋₁₂)-Alkylcycloalkyl bedeutet;
die Radikale R₇, die gleich oder voneinander verschieden sein können, für H, (C₁₋₈)-Alkyl, (C₂₋₆)-Alkenyl, (C₆₋₁₂)-Cycloalkyl, (C₆₋₁₂)-Alkylcycloalkyl oder (C₁₋₄)-Hydroxyalkyl stehen;
oder die Gruppe 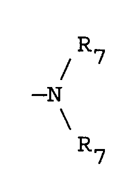 durch ein N-heterocyclisches Radikal ersetzt ist, welches über das Stickstoffatom an die Alkylkette gebunden ist, wobei dieses Radikal gegebenenfalls mindestens ein weiteres Heteroatom enthält;
oder in der allgemeinen Formel (I) mindestens eine der Gruppen 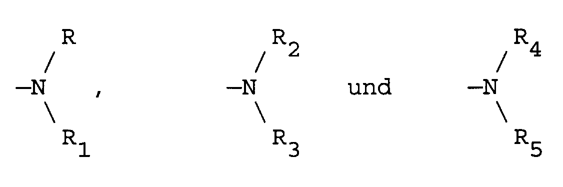 durch ein N-heterocyclischs Radikal ersetzt ist, welches über das Stickstoffatom an den Triazin-Ring gebunden ist und gegebenenfalls mindestens ein weiteres Heteroatom enthält;
die restlichen Radikale R bis R₅, die gleich oder voneinander verschieden sein können, die obigen Bedeutungen haben oder für H, (C₁₋₁₈) -Alkyl, (C₂₋₈)-Alkenyl, (C₆₋₁₆)-Cycloalkyl oder (C₆₋₁₆)-Alkylcycloalkyl stehen, welche gegebenenfalls mit einer oder mehreren Hydroxylgruppen substituiert sind;
und die so erhaltene Zusammensetzung vorzugsweise entweder extrudiert oder granuliert wird.

2. Verfahren gemäß Anspruch 1, dadurch gekennzeichnet, daß mindestens eine der Gruppen 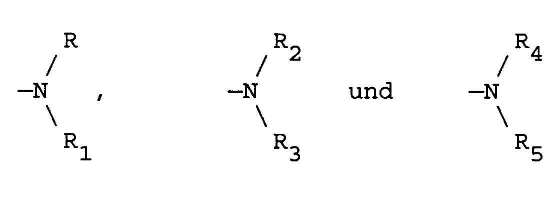 in der allgemeinen Formel (I) durch ein heterocyclisches Radikal ersetzt ist, welches ausgewählt ist aus Aziridinyl, Pyrrolidinyl, Piperidinyl, Morpholinyl, Thiomorpholinyl, Piperazinyl, 4-Methyl-piperazinyl, 4-Ethyl-piperazinyl, 2-Methyl-piperazinyl, 2,5-Dimethyl-piperazinyl, 2,3,5,6-Tetramethyl-piperazinyl, 2,2,5,5-Tetramethyl-piperazinyl, 2-Ethyl-piperazinyl und 2,5-Diethylpiperazinyl.

3. Verfahren gemäß einem der Ansprüche 1 und 2, dadurch gekennzeichnet, daß mindestens eines der Radikale R bis R₅ in der allgemeinen Formel (I) ersetzt ist durch:
⁅CₙH₂ₙ⁆O-R₆;
worin:
n eine ganze Zahl von 2 bis 4 und R₆ (C₁₋₄)-Alkyl ist.

4. Verfahren gemäß irgendeinem der vorausgehenden Ansprüche, dadurch gekennzeichnet, daß eine oder mehrere der Gruppen 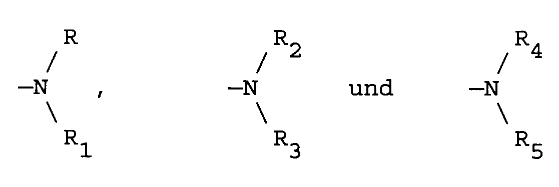 in den Verbindungen der allgemeinen Formel (I) eine -NH₂ -Gruppe ist (-NH₂ -Gruppen sind).

5. Verfahren gemäß irgendeinem der vorausgehenden Ansprüche, dadurch gekennzeichnet, daß die Gruppe 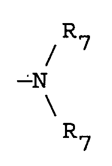 in der allgemeinen Formel (I) durch ein heterocyclisches Radikal ersetzt ist, welches ausgewählt ist aus Aziridinyl, Pyrrolidinyl, Piperidinyl, Morpholinyl, Thiomorpholinyl, Piperazinyl, 4-Methyl-piperazinyl und 4-Ethyl-piperazinyl.

6. Verfahren gemäß irgendeinem der vorausgehenden Ansprüche, dadurch gekennzeichnet, daß die Ammonium-Phosphate (b) die allgemeine Formel
(NH₄)ₙ₊₂PₙO₃ₙ₊₁
besitzen, worin n eine ganze Zahl von mindestens 2 ist;
oder die allgemeine Formel
(NH₄PO₃)ₙ
besitzen, worin n im Bereich von 50 bis 500 liegt.

7. Verfahren gemäß irgendeinem der Ansprüche 1 bis 5, dadurch gekennzeichnet, daß die Amin-Phosphate (b) ausgewählt sind aus Diethylammonium-Phosphat, Diethylamin-Phosphat, Ethylendiamin-Phosphat, Melamin-Orthophosphat und Melamin-Pyrophosphat.

8. Verfahren gemäß irgendeinem der Ansprüche 1 bis 5, dadurch gekennzeichnet, daß die Mono- oder Poly-Ammonium-Phosphonate (b) aus Salzen ausgewählt sind, welche von Mono- oder Poly-Phosphonsäuren abgeleitet sind.

9. Verfahren gemäß irgendeinem der Ansprüche 1 bis 8, dadurch gekennzeichnet, daß das Polymer (a) ausgewählt ist aus Acrylnitril/Butadien/Styrol-Terpolymeren; Styrol/Acrylnitril-Copolymeren; Polyurethanen; Polyethylenterephthalat; Polybutylenterephthalat; Polyamiden sowie aus Polymeren und Copolymeren von Olefinen der allgemeinen Formel
R'-CH=CH₂
worin R' ein Wasserstoffatom, ein (C₁₋₈)-Alkyl- oder ein (C₆₋₁₀)-Aryl-Radikal ist,
insbesondere aus:
(1) isotaktischem oder vorwiegend isotaktischem Polypropylen;
(2) HDPE, LLDPE und LDPE-Polyethylen;
(3) kristallinen Copolymeren des Propylens mit geringen Mengen von Ethylen und/oder anderen alpha-Olefinen, wie z.B. 1-Buten, 1-Hexen, 1-Octen und 4-Methyl-1-penten;
(4) Heterophasen-Zusammensetzungen, umfassend: (A) eine Fraktion, welche ein Propylen-Homopolymer oder eines der unter dem obigen Punkt (3) spezifizierten Copolymere beinhaltet; und (B) eine Copolymer-Fraktion, welche elastomere Copolymere des Ethylens mit einem alpha-Olefin, die gegebenenfalls kleine Mengen eines Diens enthalten, beinhaltet, wobei das alpha-Olefin vorzugsweise aus Propylen und 1-Buten ausgewählt ist; und
(5) elastomeren Copolymeren des Ethylens mit alpha-Olefin(en), die gegebenenfalls geringe Mengen eines Diens enthalten.

10. Verfahren zur Herstellung von Formkörpern, dadurch gekennzeichnet, daß das Produkt, welches gemäß irgendeinem der vorausgehenden Ansprüche erhalten wird, gemäß irgendeinem bekannten Formungsverfahren zu den besagten Formkörpern geformt wird.

11. Selbstverlöschende Polymer-Zusammensetzungen, dadurch gekennzeichnet, daß sie umfassen:
(a) 89 bis 45 Gew.-Teile eines thermoplastischen Polymers und/oder eines Polymers, welches elastomere Eigenschaften aufweist;
(b) 8 bis 30 Gew.-Teile einer oder mehrerer Verbindungen, ausgewählt aus Ammonium- und Amin-Phosphaten und/oder Ammonium- und Amin-Phosphonaten;
(c) 3 bis 25 Gew.-Teile eines oder mehrerer 2,4,6-Triamino-1,3,5-triazin-Derivate mit der allgemeinen Formel (I): 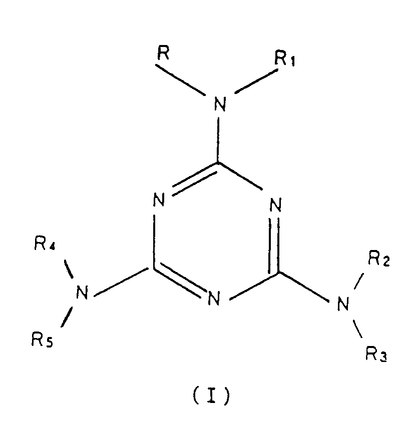
worin:
mindestens eines der Radikale R bis R₅ die folgende Bedeutung hat:
⁅CₙH₂ₙ⁆O-R₆;
oder 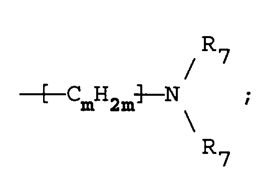 worin:
n eine ganze Zahl von 2 bis 8 ist;
m eine ganze Zahl von 2 bis 6 ist;
R₆ H, (C₁₋₈)-Alkyl, (C₂₋₆)-Alkenyl oder ⁅CₚH₂ₚ⁆O-R₈ bedeutet,
worin p eine ganze Zahl von 1 bis 4 ist und R₈ H, (C₁₋₄)-Alkyl, (C₆₋₁₂)-Cycloalkyl oder (C₆₋₁₂)-Alkylcycloalkyl bedeutet;
die Radikale R₇, die gleich oder voneinander verschieden sein können, für H, (C₁₋₈)-Alkyl, (C₂₋₆)-Alkenyl, (C₆₋₁₂)-Cycloalkyl, (C₆₋₁₂)-Alkylcycloalkyl oder (C₁₋₄)-Hydroxyalkyl stehen;
oder die Gruppe 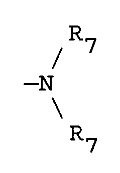 durch ein N-heterocyclisches Radikal ersetzt ist, welches über das Stickstoffatom an die Alkylkette gebunden ist, wobei dieses Radikal gegebenenfalls mindestens ein weiteres Heteroatom enthält;
oder in der allgemeinen Formel (I) mindestens eine der Gruppen 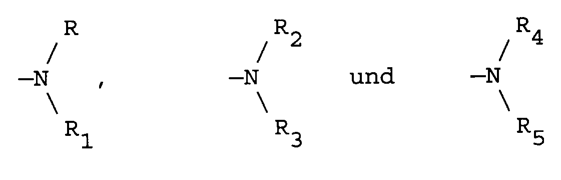 durch ein N-heterocyclischs Radikal ersetzt ist, welches über das Stickstoffatom an den Triazin-Ring gebunden ist und gegebenenfalls mindestens ein weiteres Heteroatom enthält;
und die restlichen Radikale R bis R₅, die gleich oder voneinander verschieden sein können, die obigen Bedeutungen haben oder für H, (C₁₋₁₈)-Alkyl, (C₂₋₈)-Alkenyl, (C₆₋₁₆)-Cycloalkyl oder (C₆₋₁₆)-Alkylcycloalkyl stehen, welche gegebenenfalls mit einer oder mehreren Hydroxylgruppen substituiert sind.

## Revendications (Revendications pour l'(les) Etat(s) contractant(s) suivant(s): AT, BE, CH, DE, DK, FR, GB, LI, NL, SE)

1. Compositions polymères auto-extinctrices comprenant:
a) de 89 à 45 parties en poids de polymère thermoplastique et/ou de polymère doté de propriétés élatomères;
b) de 8 à 30 parties d'un ou de plusieurs phosphonates et/ou phosphates d'amine et/ou d'ammonium;
c) de 3 à 25 parties d'au moins un dérivé de 2,4,6-triamino-1,3,5-triazine représenté par la formule (I): 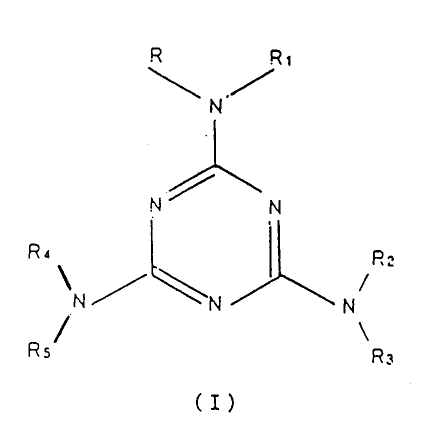
dans laquelle:
au moins l'un des radicaux R à R₅ représente un groupe
⁅CₙH₂ₙ⁆O-R₆;
ou 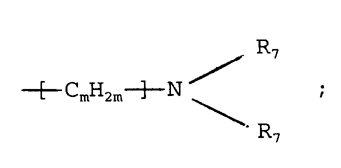 dans lesquels:
n représente un nombre entier de 2 à 8, de préférence de 2 à 4;
m représente un nombre entier de 2 à 6;
R₆ représente un atome d'hydrogène, un radical alkyle en C₁ à C₈, un radical alkényle en C₂ à C₆, un groupe ⁅CₚH₂ₚ⁆O-R₈;
dans lequel:
p représente un nombre entier de 1 à 4; et
R₈ représente un atome d'hydrogène, un radical alkyle en C₁ à C₄, un radical cycloalkyle en C₆ à C₁₂ ou un radical alkylcycloalkyle en C₆ à C₁₂;
les radicaux R₇, qui peuvent être identiques ou différents les uns des autres, représentent un atome d'hydrogène, un radical alkyle en C₁ à C₈, alkényle en C₂ à C₆, cycloalkyle en C₆ à C₁₂, alkylcycloalkyle en C₆ à C₁₂ ou hydroxyalkyle en C₁ à C₄; ou dans lesquels le résidu: 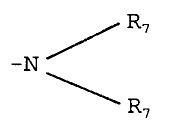 est remplacé par le radical N-hétérocyclique lié à la chaîne alkyle par l'atome d'azote et éventuellement contenant un à plusieurs autres hétéroatomes;
ou dans la formule générale (I), au moins l'un des radicaux: 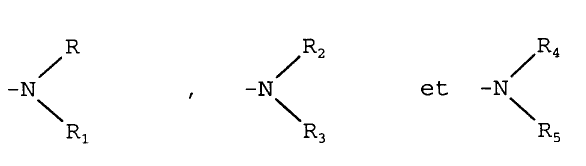 est remplacé par un radical N-hétérocyclique lié au cycle triazine par l'atome d'azote et contenant éventuellement un ou plusieurs autres hétéroatomes;
les radicaux R à R₅ restants, qui peuvent être identiques ou différents les uns des autres, sont tels que définis ci-dessus, ou représentent un atome d'hydrogène, un radical alkyle en C₁ à C₁₈, alkényle en C₂ à C₈, cycloalkyle en C₆ à C₁₆ et alkylcycloalkyle en C₆ à C₁₆, éventuellement substitué par un ou plusieurs groupes hydroxy.

2. Compositions selon la revendication 1, dans lesquelles au moins l'un des radicaux: 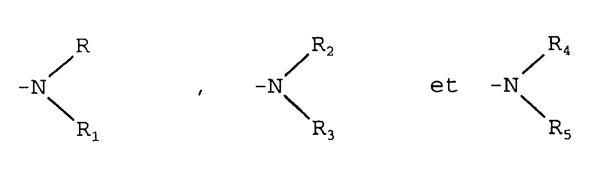 dans la formule générale (I) est remplacé par un radical hétérocyclique sélectionné parmi:
aziridinyle, pyrrolidinyle, pipéridinyle, morpholinyle, thiomorpholinyle, pipérazinyle, 4-méthylpiperazinyle, 4-éthylpipérazinyle, 2-méthylpipérazinyle, 2,5-diméthylpipérazinyle, 2,3,5,6-tétraméthylpipérazinyle, 2,2,5,5-tétraméthylpipérazinyle, 2-éthylpipérazinyle, 2,5-diéthylpipérazinyle.

3. Compositions selon l'une quelconque des revendications 1 et 2, dans lesquelles au moins l'un des radicaux R à R₅ dabsn la formule générale (I) est remplacé par:
(̵CₙH₂ₙ)̵O-R₆
dans laquelle:
n est un nombre entier de 2 à 4; et
R₆ représente un radical alkyle en C₁ à C₄.

4. Compositions selon l'une quelconque des revendications précédentes, dans lesquelles un ou des radicaux: 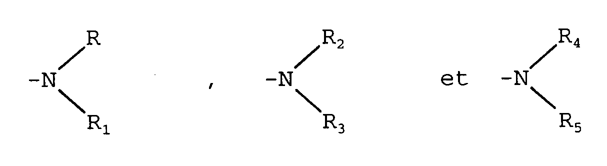 dans les composés de formule générale (I) est (sont) des groupes -NH₂.

5. Compositions selon l'une quelconque des revendications précédentes, dans lesquelles le radical: 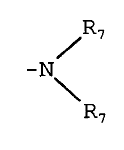 dans la formule générale (I) est remplacé par un radical hétérocyclique sélectionné parmi aziridinyle, pyrrolidinyle, pipéridinyle, morpholinyle, thiomorpholinyle, piperazinyle, 4-méthyl-pipérazinyle et 4-éthyl-pipérazinyle.

6. Compositions selon l'une quelconque des revendications précédentes, dans lesquelles les phosphates d'ammonium (b) sont représentés par la formule générale:
(NH₄)ₙ₊₂PₙO₃ₙ₊₁
dans laquelle:
n est un nombre entier supérieur ou égal à 2;
ou la formule générale:
(NH₄PO₃)ₙ
dans laquelle:
n varie de 50 à 500.

7. Compositions selon l'une quelconque des revendications 1 à 5, dans lesquelles les phosphates d'amine (b) sont sélectionnés parmi phosphate de diéthylammonium, phosphate de diéthylamine, phosphate d'éthylènediamine, orthophosphate de mélamine et pyrophosphate de mélamine.

8. Compositions selon l'une quelconque des revendications 1 à 5, dans lesquelles les mono- ou polyammonium phosphonates (b) sont sélectionnés parmi les sels dérivés d'acides mono- ou polyphosphoniques.

9. Compositions selon l'une quelconque des revendications 1 à 8, dans lesquelles le polymère (a) est sélectionné parmi les terpolymères acrylonitrile/butadiène/styrène; copolymères styrène/acrylonitrile; polyuréthanes poly(téréphtalate d'éthylène); poly-(tétréphtalate de butylène); polyamides; et polymères et copolymères d'oléfines de formule générale:
R' - CH = CH₂
dans laquelle:
R' représente un atome d'hydrogène ou un radical alkyle en C₁ à C₈ ou un radical aryle en C₆ à C₁₀,
plus particulièrement:
(1) polypropylène isostatique ou principalement isostatique;
(2) polyéthylèbne HDPE, LLDPE et LDPE;
(3) copolymères cristallins de propylène et de quantités mineures d'éthylène et/ou d'autres alpha-oléfines telles que, par exemple, 1-butène, 1-hexène, 1-octène, 4-méthyl-1-pentène;
(4) compositions hétérophasiques comprenant:
(A) une fraction constituée par un homopolymère de propylène ou par un des copolymères définis sous (3); et
(B) une fraction copolymère constituée par des copolymères élastomères d'éthylène et d'une alpha-oléfine contenant éventuellement des proportions mineures d'un ou de plusieurs diènes, dans laquelle l'alpha-oléfine est de préférence sélectionnée parmi propylène et 1-butène; et
(5) copolymères élastomères d'éthylène et d'alpha-oléfine(s), contenant éventuellement des proportions mineures d'un ou de plusieurs diènes.

10. Articles moulés obtenus à partir des compositions selon les revendications précédentes.

## Revendications (Revendications pour l'(les) Etat(s) contractant(s) suivant(s): ES)

1. Un procédé de préparation de compositions polymères auto-extinctrices caractérisé en ce que:
a) de 89 à 45 parties en poids de polymère thermoplastique et/ou de polymère doté de propriétés élatomères;
sont combinées avec
b) de 8 à 30 parties d'un ou de plusieurs dérivés sélectionnés parmi phosphonates et/ou phosphates d'amine et/ou d'ammonium; et
c) de 3 à 25 parties d'au moins un dérivé de 2,4,6-triamino-1,3,5-triazine représenté par la formule (I): 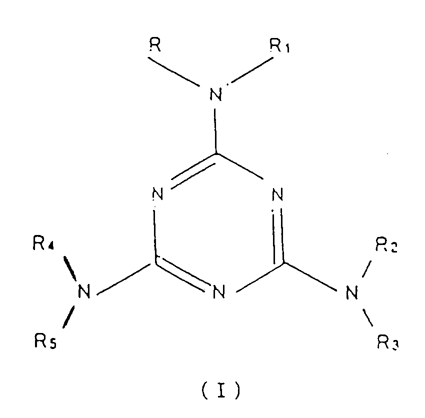
dans laquelle:
au moins l'un des radicaux R à R₅ représente un groupe
⁅CₙH₂ₙ⁆O-R₆;
ou 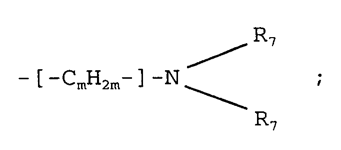 dans lesquels:
n représente un nombre entier de 2 à 8, de préférence de 2 à 4;
m représente un nombre entier de 2 à 6;
R₆ représente un atome d'hydrogène, un radical alkyle en C₁ à C₈, alkényle en C₂ à C₆, un groupe ⁅CₚH₂ₚ⁆O-R₈;
dans lequel:
p représente un nombre entier de 1 à 4; et
R₈ représente un atome d'hydrogène, un radical alkyle en C₁ à C₄, un radical cycloalkyle en C₆ à C₁₂ ou un radical alkylcycloalkyle en C₆ à C₁₂;
les radicaux R₇, qui peuvent être identiques ou différents les uns des autres, représentent un atome d'hydrogène, un radical alkyle en C₁ à C₈, alkényle en C₂ à C₆, cycloalkyle en C₆ a C₁₂, alkylcycloalkyle en C₆ à C₁₂ ou hydroxyalkyle en C₁ à C₄;
ou dans lesquels le résidu: 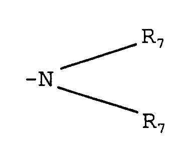 est remplacé par le radical N-hétérocyclique lié à la chaîne alkyle par l'atome d'azote et éventuellement contenant un à plusieurs autres hétéroatomes;
ou dans la formule générale (I), au moins l'un des radicaux: 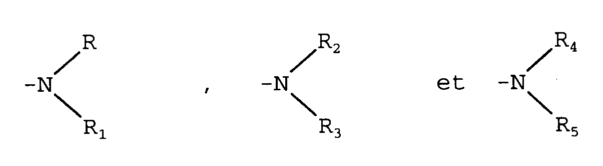 est remplacé par un radical N-hétérocyclique lié au cycle triazine par l'atome d'azote et contenant éventuellement un ou plusieurs autres hétéroatomes;
les radicaux R à R₅ restants, qui peuvent être identiques ou différents les uns des autres, sont tels que définis ci-dessus, ou représentent un atome d'hydrogène, un radical alkyle en C₁ à C₁₈, alkényle en C₂ à C₈, cycloalkyle en C₆ à C₁₆ et alkylcycloalkyle en C₆ à C₁₆, éventuellement substitué par un ou plusieurs groupes hydroxy,
et la composition ainsi obtenue est de préférence soit extrudée, soit granulée.

2. Le procédé selon la revendication 1, caractérisé en ce que au moins l'un des radicaux: 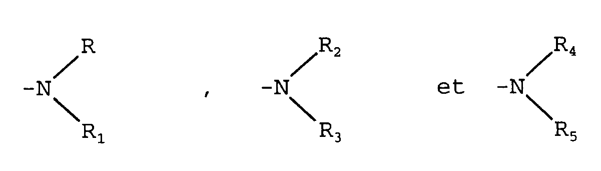 dans la formule générale (I) est remplacé par un radical hétérocyclique sélectionné parmi:
aziridinyle, pyrrolidinyle, pipéridinyle, morpholinyle, thiomorpholinyle, pipérazinyle, 4-méthylpiperazinyle, 4-éthylpipérazinyle, 2-méthylpipérazinyle, 2,5-diméthylpipérazinyle, 2,3,5,6-tétraméthylpipérazinyle, 2,2,5,5-tétraméthylpipérazinyle, 2-éthylpipérazinyle, 2,5-diéthylpipérazinyle.

3. Le procédé selon l'une quelconque des revendications 1 et 2, caractérisé en ce que au moins l'un des radicaux R à R₅ dabsn la formule générale (I) est remplacé par:
(̵CₙH₂ₙ)̵O-R₆
dans laquelle:
n est un nombre entier de 2 à 4; et
R₆ représente un radical alkyle en C₁ à C₄.

4. Le procédé selon l'une quelconque des revendications précédentes, caractérisé en ce que un ou des des radicaux: 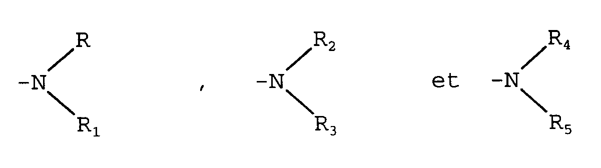 dans les composés de formule générale (I) est (sont) des groupes -NH₂.

5. Le procédé selon l'une quelconque des revendications précédentes, caractérisé en ce que le radical: 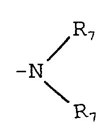 dans la formule générale (I) est remplacé par un radical hétérocyclique sélectionné parmi aziridinyle, pyrrolidinyle, pipéridinyle, morpholinyle, thiomorpholinyle, piperazinyle, 4-méthyl-pipérazinyle et 4-éthyl-pipérazinyle.

6. Le procédé selon l'une quelconque des revendications précédentes, caractérisé en ce que les phosphates d'ammonium (b) sont représentés par la formule générale:
(NH₄)ₙ₊₂PₙO₃ₙ₊₁
dans laquelle:
n est un nombre entier supérieur ou égal à 2;
ou la formule générale:
(NH₄PO₃)ₙ
dans laquelle:
n varie de 50 à 500.

7. Le procédé selon l'une quelconque des revendications 1 à 5, caractérisé en ce que les phosphates d'amine (b) sont sélectionnés parmi phosphate de diéthylammonium, phosphate de diéthylamine, phosphate d'éthylènediamine, orthophosphate de mélamine et pyrophosphate de mélamine.

8. Le procédé selon l'une quelconque des revendications 1 à 5, caractérisé en ce que les mono- ou polyammonium phosphonates (b) sont sélectionnés parmi les sels dérivés d'acides mono- ou polyphosphoniques.

9. Le procédé selon l'une quelconque des revendications 1 à 8, caractérisé en ce que le polymère (a) est sélectionné parmi les terpolymères acrylonitrile/bu tadiène/styrène; copolymères styrène/acrylonitrile; polyuréthanes poly(téréphtalate d'éthylène); poly-(tétréphtalate de butylène); polyamides; et polymères et copolymères d'oléfines de formule générale:
R' - CH = CH₂
dans laquelle:
R' représente un atome d'hydrogène ou un radical alkyle en C₁ à C₈ ou un radical aryle en C₆ à C₁₀,
plus particulièrement:
(1) polypropylène isostatique ou principalement isostatique;
(2) polyéthylèbne HDPE, LLDPE et LDPE;
(3) copolymères cristallins de propylène et de quantités mineures d'éthylène et/ou d'autres alpha-oléfines telles que, par exemple, 1-butène, 1-hexène, 1-octène, 4-méthyl-1-pentène;
(4) compositions hétérophasiques comprenant:
(A) une fraction constituée par un homopolymère de propylène ou par un des copolymères définis sous (3); et
(B) une fraction copolymère constituée par des copolymères élastomères d'éthylène et d'une alpha-oléfine contenant éventuellement des proportions mineures d'un ou de plusieurs diènes, dans laquelle l'alpha-oléfine est de préférence sélectionnée parmi propylène et 1-butène; et
(5) copolymères élastomères d'éthylène et d'alpha-oléfine(s), contenant éventuellement des proportions mineures d'un ou de plusieurs diènes.

10. Un procédé de préparation d'articles moulés caractérisé en ce que leproduit obtenu selon l'une quelconque des revendications précédentes est transformé en lesdits articles moulés selon l'une quelconque des techniques de moulage bien connues.

11. Compositions polymères auto-extinctrices comprenant:
a) de 89 à 45 parties en poids de polymère thermoplastique et/ou de polymère doté de propriétés élatomères;
b) de 8 à 30 parties d'un ou de plusieurs phosphonates et/ou phosphates d'amine et/ou d'ammonium;
c) de 3 à 25 parties d'au moins un dérivé de 2,4,6-triamino-1,3,5-triazine représenté par la formule (I): 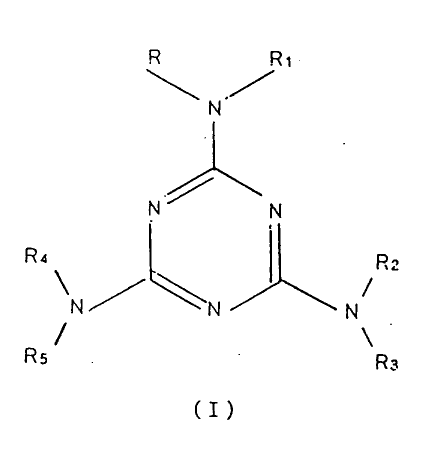
dans laquelle:
au moins l'un des radicaux R à R₅ représente un groupe
⁅CₙH₂ₙ⁆O-R₆;
ou 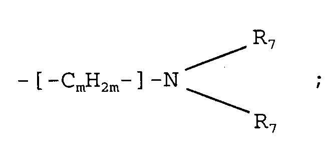 dans lesquels:
n représente un nombre entier de 2 à 8, de préférence de 2 à 4;
m représente un nombre entier de 2 à 6;
R₆ représente un atome d'hydrogène, un radical alkyle en C₁ à C₈, alkényle en C₂ à C₆, un groupe ⁅CₚH₂ₚ⁆O-R₈;
dans lequel:
p représente un nombre entier de 1 à 4; et
R₈ représente un atome d'hydrogène, un radical alkyle en C₁ à C₄, un radical cycloalkyle en C₆ à C₁₂ ou un radical alkylcycloalkyle en C₆ à C₁₂;
les radicaux R₇, qui peuvent être identiques ou différents les uns des autres, représentent un atome d'hydrogène, un radical alkyle en C₁ à C₈, alkényle en C₂ à C₆, cycloalkyle en C₆ à C₁₂, alkylcycloalkyle en C₆ à C₁₂ ou hydroxyalkyle en C₁ à C₄;
ou dans lesquels le résidu: 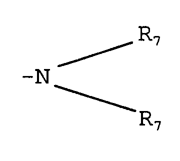 est remplacé par le radical N-hétérocyclique lié à la chaîne alkyle par l'atome d'azote et éventuellement contenant un à plusieurs autres hétéroatomes;
ou dans la formule générale (I), au moins l'un des radicaux: 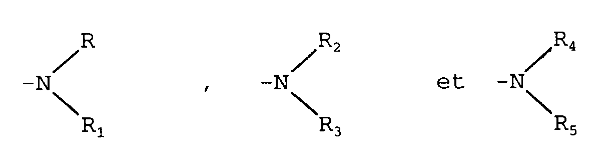 est remplacé par un radical N-hétérocyclique lié au cycle triazine par l'atome d'azote et contenant éventuellement un ou plusieurs autres hétéroatomes;
les radicaux R à R₅ restants, qui peuvent être identiques ou différents les uns des autres, sont tels que définis ci-dessus, ou représentent un atome d'hydrogène, un radical alkyle en C₁ à C₁₈, alkényle en C₂ à C₈, cycloalkyle en C₆ à C₁₆ et alkylcycloalkyle en C₆ à C₁₆, éventuellement substitué par un ou plusieurs groupes hydroxy.
